# EUROPÄISCHE PATENTSCHRIFT

(11) **EP 3 036 793 B1**
(45) Veröffentlichungstag und Bekanntmachung des Hinweises auf die Patenterteilung: **15.01.2020**
(21) Anmeldenummer: 14757898.3
(22) Anmeldetag: 22.08.2014
(51) Int. Cl.: H01Q 1/32, H01Q 1/48, H01Q 1/52, H01Q 9/40, H01Q 21/28, H02J 7/00, H04B 5/00

(54) **VORRICHTUNG UND VERFAHREN ZUR KOMBINIERTEN SIGNALÜBERTRAGUNG ODER ZUR KOMBINIERTEN SIGNAL- UND ENERGIEÜBERTRAGUNG**
DEVICE AND METHOD FOR COMBINED SIGNAL TRANSMISSION OR FOR COMBINED SIGNAL TRANSMISSION AND ENERGY TRANSMISSION
DISPOSITIF ET PROCÉDÉ PERMETTANT LA TRANSMISSION COMBINÉE DE SIGNAUX OU LA TRANSMISSION COMBINÉE DE SIGNAUX ET D'ÉNERGIE

(30) Priorität: 23.08.2013 DE 102013216753
(43) Veröffentlichungstag der Anmeldung: 29.06.2016
(73) Patentinhaber: Novero Dabendorf GmbH, 15806 Dadendorf (DE)
(72) Erfinder: HOLZ, Rainer, 12107 Berlin (DE); SCHOLZ, Frank, 13505 Berlin (DE); AL-MUGHALLES, Ahmed, 12043 Berlin (DE)
(74) Vertreter: Ramrath, Lukas
(86) Internationale Anmeldenummer: PCT/EP2014/067910
(87) Internationale Veröffentlichungsnummer: WO 2015/025037

(56) Entgegenhaltungen:
- WO-A1-2013/105005
- WO-A2-2012/071268
- DE-A1-102010 027 620
- US-A1- 2013 029 595

## Beschreibung

Die Erfindung betrifft eine Vorrichtung und ein Verfahren zur kombinierten Signalübertragung oder zur kombinierten Signal- und Energieübertragung, insbesondere zu einem portablen elektronischen Endgerät.

Endgeräte, insbesondere portable elektrische oder elektronische Endgeräte, z.B. Mobiltelefone, PDAs (Personal Digital Assistant), Audio- und Video-Wiedergabegeräte, Fotoapparate, am Kopf tragbare Lautsprecher und Mikrofoneinheiten (so genannte Headsets), Taschenlampen, Zahnbürsten und Kaffeetassen mit integrierter Heizung, um nur einige zu nennen, besitzen einen Energiespeicher zur Versorgung des elektrischen Geräts mit elektrischer Energie. Andernfalls könnte das Endgerät nicht oder nur unter permanenter Zufuhr von elektrischer Energie von außen betrieben werden. Zum Laden des Energiespeichers oder zum Betreiben des Endgeräts wird traditionell eine Kabelverbindung zu dem elektrischen Endgerät hergestellt.

Es sind jedoch auch Verfahren zur kabellosen oder drahtlosen Übertragung von elektrischer Energie zum Endgerät bekannt. So kann z.B. eine induktive Übertragung von elektrischer Energie zum Endgerät erfolgen, wodurch der Energiespeicher des Endgeräts aufgeladen werden kann und/oder das Endgerät betrieben werden kann. Hierbei wird von einer primärseitigen Leiterstruktur, insbesondere einer primärseitigen Spulenanordnung, ein elektromagnetisches Wechselfeld erzeugt, welches von einer sekundären, endgeräteseitigen Leiterstruktur empfangen wird, wobei die sekundäre Leiterstruktur einen sekundärseitigen Wechselstrom erzeugt.

Weiter bekannt ist eine kabellose oder drahtlose Kommunikation eines Endgeräts mit weiteren Geräten, z.B. über eine Funkverbindung.

Auch in Kraftfahrzeugen besteht der Bedarf, Endgeräte, insbesondere portable Endgeräte, induktiv zu laden und eine gleichzeitige drahtlose Kommunikation des Endgeräts z.B. mit einem Kommunikationssystem des Fahrzeugs zu ermöglichen.

Hierbei ist es wünschenswert, dass eine drahtlose Datenkommunikation zum Endgerät qualitativ möglichst wenig durch eine gleichzeitig erfolgende drahtlose Übertragung von Energie beeinträchtigt wird.

Die US 2005/0007067 A1 offenbart eine Vorrichtung zur Leistungsversorgung einer Batterie in einem portablen Gerät, wobei die Vorrichtung einen Primärteil zur Versorgung der Batterie mit Leistung und Mittel zum Leistungsempfang umfasst, wobei die Mittel zum Leistungsempfang mit der Batterie gekoppelt sind. Die Mittel zum Leistungsempfang sind fähig, Leistung vom Primärteil unabhängig von einer Orientierung der Mittel zum Leistungsempfang zu empfangen. Die Druckschrift beschreibt weiter eine Halterung für portable Geräte. Diese Halterung ist als Tasche ausgebildet, wobei portable Endgeräte durch Klebebänder oder Clips gehaltert werden können.

Die DE 10 2010 027 620 A1 beschreibt eine Anordnung zur drahtlosen Ankopplung eines Funkgeräts, insbesondere eines Mobiltelefons, über eine Funkverbindung, insbesondere an eine Einrichtung eines Kraftfahrzeugs oder an eine stationäre Funkeinrichtung.

Die WO 2007/118694 A1 beschreibt eine Anordnung zur Ankopplung eines Mobiltelefons an Einrichtungen eines Kraftfahrzeugs, wobei das Mobiltelefon drahtlos an eine Antennenstruktur des Kraftfahrzeugs angekoppelt ist. Die Antennenstruktur kann eine spiralförmige Antenne sein. Dadurch, dass die Antennenstruktur eine Form aufweist, die bei einer Maßstabsänderung unverändert bleibt, und für verschiedene Signalfrequenzen jeweils Strukturelemente der Antennenstruktur vorhanden sind, wird eine breitbandige Ankopplung ermöglicht, d. h. es können Funkwellen in einem breiten Frequenzbereich übertragen werden. Die Antennenstruktur kann eine flache, im Wesentlichen zweidimensionale Struktur sein, wobei sich die Mobiltelefonantenne in einem geringen Abstand zu der Antennenstruktur und damit im Nahfeld der Antennenstruktur befindet.

Die DE 10 2009 033 751 A1 beschreibt, dass bei einer Anordnung zum drahtlosen Ankoppeln eine im Wesentlichen horizontal verlaufende Oberfläche vorgesehen ist, auf die das Funkgerät zur Ankopplung, d. h. sowohl zur Herstellung der Funkverbindung als auch zur induktiven Ladung aufgelegt werden kann. Die Anordnung weist eine Auflagefläche zum Auflegen des elektronischen Geräts auf, so dass das aufgelegte elektronische Gerät über die Funkverbindung angekoppelt ist oder zumindest in der aufgelegten Position eine Funkverbindung herstellbar ist. Um das Mobiltelefon auch bei Einwirkung von externen Kräften, wie sie bei Beschleunigungen oder Verzögerungen des Kraftfahrzeugs auftreten können, in einer optimalen Position zu halten, weist die Auflagefläche eine um eine senkrecht zur Auflagefläche verlaufende Achse rotationssymmetrische Aussparung auf, in die ein entsprechend der rotationssymmetrischen Aussparung geformter Vorsprung des Funkgeräts eingreift.

Die WO 2013/105005 A1 offenbart ein drahtloses Andocksystem zur Anbindung mobiler Geräte.

Es stellt sich das technische Problem, ein Verfahren und eine Vorrichtung zur kombinierten Signalübertragung oder zur kombinierten Signal- und Energieübertragung zu schaffen, welche eine gleichzeitige Übertragung mehrerer Signale oder eine gleichzeitige Signal- und Energieübertragung zu einem portablen elektronischen Endgerät erlaubt, wobei eine Qualität der Signal- und/oder Energieübertragung möglichst wenig beeinträchtigt und ein Bauraum der vorgeschlagenen Vorrichtung minimiert wird.

Die Lösung des technischen Problems ergibt sich durch die Gegenstände mit den Merkmalen der Ansprüche 1 und 14. Weitere vorteilhafte Ausgestaltungen der Erfindung ergeben sich aus den Unteransprüchen.

Vorgeschlagen wird eine Vorrichtung zur kombinierten Signalübertragung. Hierbei werden gleichzeitig oder simultan verschiedene Signale zwischen einem Sender und einem Empfänger, insbesondere drahtlos, übertragen. Der Empfänger kann in diesem Fall z.B. ein elektronisches Endgerät, z.B. ein portables elektronisches Endgerät, wie z.B. ein Mobiltelefon, sein.

Die verschiedenen Signale können hierbei zeitgleich über verschiedene, insbesondere voneinander unabhängige, Kanäle übertragen werden. Beispielsweise kann der Sender eine in oder an einem Fahrzeug angeordnete Sendeeinrichtung sein. Z.B. können Signale mit unterschiedlichen Frequenzen gleichzeitig gesendet und empfangen werden.

Alternativ betrifft die Erfindung eine Vorrichtung zur kombinierten Signal- und Energieübertragung, insbesondere zur drahtlosen Energieübertragung. Hierbei wird gleichzeitig oder simultan eine drahtlose Übertragung von Signalen und von Energie durchgeführt. Die Energieübertragung erfolgt hierbei vorzugsweise induktiv, z.B. zum induktiven Laden eines Energiespeichers des Empfängers, insbesondere des portablen elektronischen Endgeräts. Hierbei können Signale zur Signalübertragung und Signale zur Energieübertragung, wie vorhergehend erläutert, gleichzeitig, aber über verschiedene Kanäle, beispielsweise mit unterschiedlichen Frequenzen, übertragen werden.

Die Vorrichtung umfasst mindestens eine Windungsstruktur zur Erzeugung eines ersten elektromagnetischen Feldes, insbesondere eines Wechselfeldes, zur Energieübertragung oder zur Signalübertragung. Die Windungsstruktur kann hierbei beispielsweise als Spulenstruktur ausgebildet sein, die mindestens eine Spule umfasst oder ausbildet. Die Spule kann hierbei z.B. eine konzentrische Spule sein, bei der Windungen um eine zentrale Achse angeordnet sind. Auch kann die Spule eine vorbestimmte Windungszahl aufweisen. Das elektromagnetische Feld kann hierbei durch Anlegen einer Wechselspannung an die Windungsstruktur erzeugt werden. Hierbei fließt ein Wechselstrom durch die Windungsstruktur und erzeugt das erste elektromagnetische Feld. Das erste elektromagnetische Feld sowie die/der das erste elektromagnetische Feld erzeugende Spannung/ Strom kann hierbei eine erste vorbestimmte Frequenz aufweisen.

Weiter umfasst die Vorrichtung mindestens eine Antennenstruktur für eine weitere Signalübertragung. Die Antennenstruktur umfasst eine erste Teilstruktur und eine zweite Teilstruktur, wobei die Antennenstruktur derart ausgebildet ist, dass mittels der Antennenstruktur Signale in einem vorbestimmten Frequenzbereich empfangbar und sendbar sind. Der vorbestimmte Frequenzbereich kann beispielsweise Frequenzen von 700 MHz (einschließlich) bis 2.600 MHz (einschließlich) umfassen. Die Frequenz des ersten elektromagnetischen Feldes und somit auch die Frequenz des/der das erste elektromagnetische Feld erzeugenden Wechselstroms/Wechselspannung liegt hierbei außerhalb dieses vorbestimmten Frequenzbereiches. Dient das erste elektromagnetische Feld zur Energieübertragung, so kann die Frequenz des ersten elektromagnetischen Feldes beispielsweise in einem Frequenzbereich von 100 kHz bis 10 MHz liegen, weiter beispielsweise in einem Frequenzbereich von 105 kHz bis 205 kHz liegen.

Alternativ oder kumulativ ist die erste Teilstruktur derart gegenüber der zweiten Teilstruktur angeordnet, dass mittels der Antennenstruktur Signale in dem vorbestimmten Frequenzbereich empfangbar und sendbar sind. In diesem Fall werden die vorhergehend erläuterten Sende- und Empfangseigenschaften der Antennenstruktur also durch die Ausbildung der ersten und zweiten Teilstruktur und/oder die Anordnung der ersten Teilstruktur relativ zur zweiten Teilstruktur bestimmt.

Die erste Teilstruktur kann hierbei mit einem ersten Signalpotential verbindbar sein, beispielsweise über eine entsprechende Kontaktiereinrichtung, insbesondere über einen Hochfrequenz-Steckverbinder oder einen ersten Kontakt des Hochfrequenz-Steckverbinders. Die weitere Teilstruktur kann mit einem weiteren Signalpotential verbindbar sein, beispielsweise über eine entsprechende Kontaktiereinrichtung, insbesondere einen Hochfrequenz-Steckverbinder oder über einen weiteren Kontakt des Hochfrequenz-Steckverbinders. Hierbei kann das erste Signalpotential oder das weitere Signalpotential ein, insbesondere konstantes, Referenzpotential sein, wobei das verbleibende Signalpotential ein zeitlich veränderliches Potential ist. Das Referenzpotential kann ein Massepotential oder Basispotential sein. Das (Hochfrequenz-) Signal kann über einen Unterschied zwischen den Potentialen erzeugt oder bereitgestellt werden.

So ist es vorstellbar, dass die erste Teilstruktur, insbesondere über einen ersten Signalanschlusspol, mit einer Kabelseele und die zweite Teilstruktur, insbesondere über einen weiteren Signalanschlusspol, mit einem Leitungsschirm eines Koaxialkabels elektrisch verbindbar ist oder verbunden wird. Alternativ ist/wird die erste Teilstruktur mit dem Leitungsschirm und die zweite Teilstruktur mit der Kabelseele des Koaxialkabels elektrisch verbindbar/verbunden. Die Kabelseele kann hierbei einen Innenleiter des Koaxialkabels bezeichnen. Die Signalanschlusspole können Teil einer Kontaktiereinrichtung sein, wobei die Kontaktiereinrichtung wiederum Teil der vorgeschlagenen Vorrichtung sein kann. Über das Koaxialkabel kann das zu übertragende Signal eingespeist oder das zu empfangende Signal abgenommen werden.

Die erste Teilstruktur kann mit der zweiten Teilstruktur galvanisch oder signalleitend, insbesondere hochfrequenzsignalleitend, verbunden sein. Alternativ kann die erste Teilstruktur aber auch nicht galvanisch oder nicht signalleitend mit der zweiten Teilstruktur verbunden sein. Dies kann bedeuten, dass die erste und die zweite Teilstruktur galvanisch oder signaltechnisch voneinander getrennt ausgebildet und/oder angeordnet sind.

Die erste Teilstruktur kann hierbei einen abstrahlenden Teil einer Sendeantenne oder einen empfangenden Teil einer Empfangsantenne ausbilden. Die zweite Teilstruktur kann insbesondere zumindest einen Teil einer Massefläche der Antennenstruktur ausbilden, wobei die Massefläche der ersten Teilstruktur zugeordnet ist. Die Massefläche kann jedoch auch durch eine von der zweiten Teilstruktur verschiedene Struktur ausgebildet werden.

Wie nachfolgend noch näher erläutert, können die erste Teilstruktur und die der ersten Teilstruktur zugeordnete Massefläche in einer Ebene oder in zueinander parallelen Ebenen angeordnet sein. Weiter können die erste Teilstruktur und die Massefläche derart ausgebildet und angeordnet sein, dass in einer gemeinsamen Projektionsebene, beispielsweise der vorhergehend erläuterten Projektionsebene, sich ein verändernder Abstand zwischen einander zugewandten Randabschnitten der ersten Teilstruktur und der Massefläche ergibt. So kann sich die erste Teilstruktur hin zur Massefläche verjüngen und/oder die Massefläche hin zur ersten Teilstruktur verjüngen.

Im Sinne der Erfindung kann "empfangbar" und "sendbar" bedeuten, dass die Antennenstruktur derart ausgebildet ist, dass sie, insbesondere an ihrem Fußpunkt, für Frequenzen in dem vorhergehend erläuterten vorbestimmten Frequenzbereich eine Reflexionsdämpfung aufweist, die größer als ein vorbestimmter Wert, beispielsweise größer als 10dB, ist. Idealerweise ist die Reflexionsdämpfung unendlich groß, so dass die gesamte in die Antennenstruktur eingespeiste Leistung im vorbestimmten Frequenzbereich von der Antennenstruktur abgestrahlt wird. Die Reflexionsdämpfung kann beispielsweise mittels eines Netzwerkanalysators bestimmt werden. Die Reflexionsdämpfung kann als das Verhältnis aus eingekoppelter Leistung und reflektierter Leistung definiert werden.

Auch können die Eigenschaften "sendbar" und "empfangbar" bedeuten, dass ein Koppelfaktor oder eine Koppeldämpfung einer signaltechnischen Kopplung zwischen der Antennenstruktur und einer weiteren Antennenstruktur des elektronischen Endgeräts für Signale aus dem vorbestimmten Frequenzbereich kleiner als ein vorbestimmter Wert, beispielsweise kleiner als -8dB, ist. Idealerweise soll eine ungedämpfte signaltechnische Kopplung zwischen der Antennenstruktur und der weiteren Antennenstruktur gewährleistet werden.

Der Koppelfaktor kann hierbei frequenz- und bandabhängig unterschiedlich groß sein. Vorzugsweise ist der Koppelfaktor in mehreren vorbestimmten Frequenzbereichen, beispielsweise in Frequenzbereichen mehrerer oder aller Mobilfunkbänder GSM 850, GSM 900, GSM 1800, GSM1900, LTE700, LTE800 und weiterer Mobilfunkbänder, kleiner als der vorbestimmte Wert, beispielsweise -8dB.

Hierbei sollte der Koppelfaktor für Sende- und Empfangsrichtung der Antennenstruktur möglichst gleich sein oder maximal eine vorbestimmte (geringe) Differenz aufweisen.

Der Koppelfaktor kann weiter von der weiteren Antennenstruktur des elektronischen Endgeräts abhängig sein. Die Antennenstruktur der vorgeschlagenen Vorrichtung ist vorzugsweise daher derart auszubilden, dass für eine möglichst große Anzahl weiterer Antennenstrukturen das vorhergehend erläuterte Koppelfaktorkriterium erfüllt ist.

Auch kann der Koppelfaktor von einer Position und Orientierung der weiteren Antennenstruktur des elektronischen Endgeräts zur Antennenstruktur abhängig sein. Die Antennenstruktur ist vorzugsweise daher derart auszubilden, dass für eine möglichst große Anzahl von relativen Lagen und Orientierungen das vorhergehend erläuterte Koppelfaktorkriterium erfüllt ist.

Vorzugsweise ist die Antennenstruktur daher derart ausgebildet, dass für eine Vielzahl von weiteren Antennenstrukturen und/oder relativen Lagen und/oder relativen Orientierungen der gleiche Koppelfaktor bereitgestellt wird und/oder das vorhergehend erläuterte Koppelfaktorkriterium erfüllt ist.

Insbesondere kann die Antennenstruktur derart ausgebildet sein, dass zwischen einer weiteren Antennenstruktur eines elektronischen Endgeräts, welches auf die nachfolgend näher erläuterte Auflagefläche aufgelegt ist, und der Antennenstruktur der vorhergehend erläuterte Koppelfaktor gegeben ist. Das Endgerät kann hierbei mit einer Vielzahl von relativen Lagen und/oder relativen Orientierungen auf der Auflagefläche aufgelegt sein.

Die Windungsstruktur zur Erzeugung eines ersten elektromagnetischen Feldes zur Energieübertragung kann beispielsweise als sogenannte Ladespule ausgebildet sein. Die Windungsstruktur zur Erzeugung eines ersten elektromagnetischen Feldes zur Signalübertragung kann beispielsweise als NFC (Near Field Communication)-Spule ausgebildet sein. In diesem Fall kann die Frequenz des ersten elektromagnetischen Feldes 13,56 MHz betragen.

Weiter ist zumindest die erste Teilstruktur in einer Projektionsfläche oder -ebene, die senkrecht zu einer zentralen Achse der Windungsstruktur orientiert ist, benachbart zu der mindestens einen Windungsstruktur angeordnet. Die zentrale Achse der Windungsstruktur ist eine Symmetrieachse der Windungsstruktur, beispielsweise eine zentrale Symmetrieachse. Diese zentrale Achse verläuft parallel zu einem Normalenvektor der Projektionsebene. Die zentrale Achse kann sich auch parallel zu einer Hauptausbreitungsrichtung des ersten elektromagnetischen Feldes erstrecken. Im Sinne der Erfindung "benachbart" bedeutet, dass die erste Teilstruktur, insbesondere zumindest ein Teil eines Randes der ersten Teilstruktur in der Projektionsfläche, direkt an die Windungsstruktur, insbesondere zumindest einen Teil eines Randes der Windungsstruktur, angrenzt oder von der Windungsstruktur, insbesondere zumindest eines Teils eines Randes der Windungsstruktur, beabstandet angeordnet ist. Weist die Windungsstruktur z.B. eine Einhüllende, insbesondere eine Einhüllende mit minimalen geometrischen Dimensionen, auf, so kann in der Projektionsebene die erste Teilstruktur außerhalb dieser Einhüllenden angeordnet sein.

Die Windungsstruktur und die Antennenstruktur, insbesondere die erste Teilstruktur, können entlang der zentralen Achse der Windungsstruktur in zwei parallel zueinander verlaufenden Ebenen angeordnet sein. Diese Ebenen können beispielsweise durch als unterschiedliche Bauteile ausgebildete Leiterplatten ausgebildet sein. Die Windungsstruktur und die Antennenstruktur, insbesondere die erste Teilstruktur, können auf diesen Leiterplatten angeordnet sein.

Die vorgeschlagene Vorrichtung kann weiter eine Auflagefläche für das portable elektronische Endgerät umfassen oder aufweisen. Beispielsweise kann die Vorrichtung ein Gehäuse aufweisen, welches die Auflagefläche ausbildet oder auf welchem die Auflagefläche angeordnet ist. Die Windungsstruktur und die Antennenstruktur können hierbei innerhalb des Gehäuses, beispielsweise in einem Innenvolumen des Gehäuses, angeordnet sein. Die Antennenstruktur, insbesondere die erste Teilstruktur, kann entlang der zentralen Achse der Windungsstruktur zwischen der Windungsstruktur und der Auflagefläche angeordnet sein. Die Auflagefläche kann hierbei zumindest teilweise ebenfalls senkrecht zu der zentralen Achse der Windungsstruktur orientiert sein. Somit können die Windungsstruktur, die Antennenstruktur und die Auflagefläche in drei voneinander verschiedenen, jedoch parallelen Ebenen angeordnet sein.

Auch die erste und die zweite Teilstruktur der Antennenstruktur können in einer Ebene oder in zwei verschiedenen, parallelen Ebenen, die entlang der zentralen Achse beabstandet voneinander angeordnet sind, angeordnet sein. Beispielsweise kann die erste Teilstruktur auf einer ersten Oberfläche einer Leiterplatte, z.B. einer Oberseite, und die zweite Teilstruktur auf einer der ersten Oberfläche gegenüberliegenden Oberfläche der Leiterplatte, z.B. einer Unterseite, angeordnet sein. Insbesondere kann die erste Teilstruktur auf einer Oberfläche der Leiterplatte angeordnet sein, die einem auf der Auflagefläche angeordneten elektronischen Endgerät zugewandt ist, wobei die zweite Teilstruktur auf einer Oberfläche der Leiterplatte angeordnet sein kann, die dem auf der Auflagefläche angeordneten elektronischen Endgerät abgewandt ist. Auch kann die erste Teilstruktur auf einer Oberfläche der Leiterplatte angeordnet sein, die einem auf der Auflagefläche angeordneten elektronischen Endgerät abgewandt ist, wobei die zweite Teilstruktur auf einer Oberfläche der Leiterplatte angeordnet sein kann, die dem auf der Auflagefläche angeordneten elektronischen Endgerät zugewandt ist.

Zusätzlich zur ersten Teilstruktur kann auch die vorhergehend erläuterte, der ersten Teilstruktur zugeordnete, Massefläche in der Projektionsfläche oder -ebene, die senkrecht zu einer zentralen Achse der Windungsstruktur orientiert ist, zumindest teilweise oder vollständig benachbart zu der mindestens einen Windungsstruktur angeordnet sein.

Die vorgeschlagene Vorrichtung ermöglicht durch die räumliche Ausgestaltung und die Anordnung der verschiedenen Strukturen in vorteilhafter Weise, dass sich die Signale der gleichzeitigen Signalübertragungen bzw. die Signale der gleichzeitigen Signal- und Energieübertragung möglichst wenig gegeneinander beeinflussen, wodurch in vorteilhafter Weise eine Qualität der Signalübertragungen und/oder der Energieübertragung maximiert wird. Gleichzeitig ermöglicht die räumliche Anordnung der einzelnen Strukturen in der vorgeschlagenen Vorrichtung eine Ausbildung mit minimalen Bauraumanforderungen, die in vorteilhafter Weise z.B. in ein Kraftfahrzeug, beispielsweise eine Mittelkonsole eines Kraftfahrzeugs, integriert werden kann.

Erfindungsgemäß umfasst die Vorrichtung weiter eine Dämpfungsstruktur zur Dämpfung des elektrischen Feldes der Windungsstruktur. Das elektrische Feld der Windungsstruktur bezeichnet hierbei das elektrische Feld oder den elektrischen Teil des von der Windungsstruktur erzeugten ersten elektromagnetischen Feldes. Hierbei überschneidet sich die Dämpfungsstruktur in der vorhergehend erläuterten Projektionsebene mit der mindestens einen Windungsstruktur zumindest teilweise. Weist die Windungsstruktur z.B. eine Einhüllende, insbesondere eine Einhüllende mit minimalen geometrischen Dimensionen, auf, so kann in der Projektionsebene zumindest ein Teil der Dämpfungsstruktur innerhalb dieser Einhüllenden angeordnet sein. Umfasst die Vorrichtung, wie vorhergehend erläutert, eine Auflagefläche, so kann die Dämpfungsstruktur oder zumindest ein Teil der Dämpfungsstruktur entlang der zentralen Achse zwischen der Windungsstruktur und der Auflagefläche angeordnet sein. Auch ein Teil der Auflagefläche kann hierbei in der Projektionsebene mit der Windungsstruktur und/oder der Dämpfungsstruktur überschneiden.

Die Dämpfungsstruktur kann beispielsweise zumindest teilweise als Kammstruktur ausgebildet sein. Eine Kammstruktur umfasst hierbei beispielsweise einen oder mehrere zentrale(n) Steg(e) und senkrecht dazu angeordnete Zähne. Der Steg und die Zähne können beispielsweise aus einem Material mit einer vorbestimmten Leitfähigkeit, z.B. aus Kupfer, ausgebildet sein.

Die Dämpfungsstruktur dient hierbei zur Dämpfung eines elektrischen Feldes oder des elektrischen Anteils des elektromagnetischen Feldes. Beispielsweise kann die Dämpfungsstruktur derart ausgebildet sein, dass das elektrische Feld, welches durch die Windungsstruktur erzeugt wird, nach Durchtritt durch die Dämpfungsstruktur um mindestens 20 dB gedämpft ist, vorzugsweise vollständig gedämpft ist.

Gleichzeitig kann die Dämpfungsstruktur derart ausgebildet sein, dass eine Dämpfung des magnetischen Feldes oder des magnetischen Anteils des durch die Windungsstruktur erzeugten elektromagnetischen Feldes minimal ist. Beispielsweise kann die Dämpfungsstruktur derart ausgebildet sein, dass das magnetische Feld nach Durchtritt durch die Dämpfungsstruktur höchstens um 1 dB gedämpft ist, idealerweise nicht gedämpft ist.

Somit dient die Dämpfungsstruktur möglichst ausschließlich zum Dämpfen des elektrischen Feldes, während das magnetische Feld möglichst wenig beeinträchtigt wird.

Dies ermöglicht in vorteilhafter Weise, dass die Signalübertragung z.B. über die erste Teilstruktur der Antennenstruktur, möglichst wenig durch das elektrische Feld des durch die Windungsstruktur erzeugten elektromagnetischen Feldes beeinträchtigt wird. Gleichzeitig wird jedoch sichergestellt, dass die über das magnetische Feld des elektromagnetischen Feldes erfolgende Energie- oder Signalübertragung gewährleistet ist und ebenfalls so wenig wie möglich beeinträchtigt wird.

Die Dämpfung des elektrischen Felds führt hierbei nicht nur zu einer nur minimalen Beeinträchtigung der Antennenkopplung, sondern dient in vorteilhafter Weise auch dazu, die EMV-Richtlinien zur Abstrahlung einzuhalten. Das ist bei Einsatz im Automobilbereich, insbesondere im Innenraum eines Kraftfahrzeugs, besonders wichtig.

Die induktive Energieübertragung durch das elektromagnetische Feld ist mit einem ausgeprägten elektrischen Wechselfeld verbunden, das nicht nur bei der Grundfrequenz, zum Beispiel im Intervall zwischen 10 kHz und 10MHz, auftritt, sondern (bei einer geforderten hohen Effizienz) auch bei den Oberwellen der Grundfrequenz. Somit sind im Spektrum Maxima an den Vielfachen der Grundfrequenz vorhanden. Die vorgeschlagene Dämpfungsstruktur ermöglicht in vorteilhafter Weise auch die Abschirmung dieser Oberwellen, wobei das magnetische Feld nicht oder nur in geringem Maße gedämpft wird.

Beispielsweise kann die Dämpfungsstruktur als Leiterplatte ausgebildet sein, wobei die Leiterplatte Öffnungen, z.B. als Schlitze oder als Löcher ausgebildete Öffnungen, aufweist, deren Dimension, beispielsweise deren Durchmesser oder Breite, kleiner als eine vorbestimmte, wellenlängenabhängige Dimension ist.

So können die Dimensionen, beispielsweise ein Durchmesser von Öffnungen, kleiner, vorzugsweise sehr viel kleiner, als die Wellenlänge des abzuschirmenden Signals sein. Beispielsweise kann eine Dimension, insbesondere ein Durchmesser, kleiner als oder gleich λ/100 sein, wobei A die Wellenlänge des abzuschirmenden Signals bezeichnet.

Eine Dimensionierung unterhalb dieses Wertes von λ/100 verbessert die Abschirmwirkung. Das wird dann besonders wichtig, wenn nicht nur die Grundwelle, sondern ein oft nicht näher bestimmter Gehalt von Vielfachen der Grundwelle ebenfalls gedämpft werden sollen. Eine Verkleinerung der Dimension erhöht somit die Schirmwirkung bis hin zu einem Maximum, das bei Abschirmung mit einer geschlossenen metallischen Platte zu erwarten ist.

Weiter kann die Dämpfungsstruktur derart ausgebildet sein, dass ein maximaler Durchmesser eines geschlossenen Strompfades, der sich in der Dämpfungsstruktur bei Selbstinduktion ausbilden kann, kleiner als ein vorbestimmter Durchmesser ist.

Die Selbstinduktion bezeichnet hierbei eine Induktion, die durch das elektromagnetische Feld, welches durch die Windungsstruktur erzeugt wird, in der Dämpfungsstruktur verursacht ist.

Da die Dämpfungsstruktur der Windungsstruktur unmittelbar benachbart ist, kann das erregende Magnetfeld die Dämpfungsstruktur auf einer Fläche durchdringen, die mindestens der Oberfläche der Windungsstruktur entsprechen kann. Die Dämpfungsstruktur sollte daher vorzugsweise derart ausgebildet und/oder angeordnet sein, dass das magnetische Feld nicht oder nur in einem vorbestimmten geringen Maße gedämpft wird. Weiter soll eine Beeinflussung des magnetischen Felds durch ein Gegenmagnetfeld, welches z.B. durch Wirbelströme erzeugt wird, minimal sein. So kann die Dämpfungsstruktur daher vorzugsweise derart ausgebildet und/oder angeordnet sein, dass Wirbelströme in der Dämpfungsstruktur eine Stromstärke aufweisen, die geringer als ein vorbestimmter Wert ist und/oder einen Strompfad aufweisen, der kürzer als ein vorbestimmter Wert ist. Dies kann beispielsweise durch hochohmige, in sich nicht geschlossene Leiterstrukturen, erreicht werden, wobei ein nur sehr geringes, dem erregenden magnetischen Feld entgegengesetztes, Feld entsteht. Insbesondere kann die vorhergehend erläuterte Eigenschaft durch eine zumindest teilweise kammförmig ausgebildete Dämpfungsstruktur erfüllt werden, wobei die Breite der einzelnen Zähne sehr viel geringer ist als eine maximale Ausdehnung des Erregerspulenfeldes, beispielsweise geringer als ein Hundertstel der genannten Ausdehnung.

Vorzugsweise überschneiden sich die Dämpfungsstruktur, beispielsweise eine Einhüllende der Dämpfungsstruktur, und die Windungsstruktur, beispielsweise eine Einhüllende der Windungsstruktur, in der Projektionsebene vollständig. Dies bedeutet, dass entweder die Einhüllende der Dämpfungsstruktur oder die Einhüllende der Windungsstruktur vollständig innerhalb der Einhüllenden der jeweils anderen Struktur angeordnet ist.

In der Projektionsfläche oder -ebene können die erste Teilstruktur und/oder die zweite Teilstruktur der Antennenstruktur benachbart zur Dämpfungsstruktur angeordnet sein. Hierbei kann wie vorhergehend in Bezug auf die erste Teilstruktur und die Windungsstruktur erläutert, die erste Teilstruktur und/oder die zweite Teilstruktur direkt an die Dämpfungsstruktur angrenzen oder mit einem vorbestimmten Abstand von dieser angeordnet sein.

Es ist möglich, dass die Antennenstruktur und die Dämpfungsstruktur elektrisch getrennt voneinander, also elektrisch voneinander isoliert, ausgebildet sein können.

In einer bevorzugten Ausführungsform sind die Dämpfungsstruktur und die Antennenstruktur auf einer gemeinsamen Leiterplatte angeordnet.

Die gemeinsame Leiterplatte kann hierbei entlang der zentralen Achse baulich getrennt von einer Leiterplatte ausgebildet und angeordnet sein, auf welcher die Windungsstruktur angeordnet ist. Auch kann die gemeinsame Leiterplatte entlang der zentralen Achse der Windungsstruktur zwischen der vorhergehend erläuterten Auflagefläche und der Windungsstruktur angeordnet sein. Die erste Teilstruktur und/oder die zweite Teilstruktur der Antennenstruktur und die Dämpfungsstruktur können hierbei zumindest teilweise, vorzugsweise jedoch vollständig, in einer gemeinsamen Ebene angeordnet sein.

Die vorgeschlagene Ausführungsform ermöglicht in vorteilhafter Weise eine möglichst einfache bauliche Integration der Dämpfungsstruktur in die Vorrichtung, wobei gleichzeitig eine Qualität der Signal- und/oder Energieübertragung möglichst wenig beeinträchtigt wird. Hierbei ist zu berücksichtigen, dass die Signal- und/oder Energieübertragung von der Windungsstruktur bzw. der Antennenstruktur hin zu einem auf der Auflagefläche aufliegenden portablen Endgerät gerichtet sein kann. Durch die Anordnung der Dämpfungsstruktur auf einer gemeinsamen Leiterplatte mit der Antennenstruktur wird somit die Signalübertragung zwischen Antennenstruktur und einem solchen Endgerät möglichst wenig gestört, da das elektrische Feld des elektromagnetischen Feldes der Windungsstruktur in dem Bereich zwischen Antennenstruktur und Auflagefläche bereits durch die Dämpfungsstruktur gedämpft ist.

In einer weiteren Ausführungsform bildet die Dämpfungsstruktur die zweite Teilstruktur der Antennenstruktur zumindest teilweise aus. Es ist vorstellbar, dass die Dämpfungsstruktur die zweite Teilstruktur der Antennenstruktur vollständig ausbildet. Hierbei ist die Dämpfungsstruktur Bestandteil der Antennenstruktur und daher elektrisch mit der ersten Teilstruktur verbunden.

In einer bevorzugten Ausführungsform bildet zumindest ein Teil der zweiten Teilstruktur eine Massefläche der Antennenstruktur aus. Die Massefläche bezeichnet hierbei eine so genannte "ground plane". In diesem Fall können die erste Teilstruktur und die zweite Teilstruktur gemeinsam eine Monopolantenne ausbilden. Die Monopolantenne kann hierbei ein so genannter Breitband-Monopol sein, der im vorhergehend erläuterten Frequenzbereich Signale senden und empfangen kann.

Es ist hierbei möglich, dass die zweite Teilstruktur, insbesondere die Massefläche und die erste Teilstruktur, in einer gemeinsamen Ebene angeordnet sind. Auch können die zweite Teilstruktur und die erste Teilstruktur in parallelen Ebenen, die mit einem vorbestimmten (geringen) Maß voneinander beabstandet sind, angeordnet sein. In diesem Fall bilden die erste und die zweite Teilstruktur eine sogenannte planare Monopolantenne, insbesondere einen planaren Breitband-Monopol.

Alternativ bildet zumindest ein Teil der ersten Teilstruktur oder die gesamte erste Teilstruktur eine Massefläche der Antennenstruktur aus. In diesem Fall kann die zweite Teilstruktur weiterhin die Dämpfungsstruktur ausbilden.

Dies ermöglicht in vorteilhafter Weise eine möglichst einfache bauliche Integration von Dämpfungsstruktur und der Antennenstruktur, wobei gleichzeitig die Antennenstruktur möglichst platzsparend ausgebildet ist. In dieser Ausführungsform stellt also die Antennenstruktur durch eine ihrer Teilstrukturen gleichzeitig die Funktionalität der vorhergehend erläuterten Dämpfungsstruktur zur Verfügung. Dies bedeutet, dass Antennenstruktur und Dämpfungsstruktur funktionell integriert ausgebildet sind. Hierdurch lässt sich, wie vorhergehend erläutert, ein erforderlicher Bauraum weiter minimieren.

In einer weiteren Ausführungsform ist die erste Teilstruktur rahmenförmig ausgebildet, wobei die erste Teilstruktur die zweite Teilstruktur vollständig umgibt oder umschließt. Die erste Teilstruktur kann hierbei einen vollständigen Rahmen ausbilden. Hierbei kann die erste Teilstruktur eine Innenfläche bzw. ein Innenvolumen umfassen, in der/dem die zweite Teilstruktur angeordnet ist. So kann die erste Teilstruktur in der vorhergehend erläuterten Projektionsebene eine Innenfläche umfassen, in der die zweite Teilstruktur angeordnet ist.

Vorzugsweise bildet die erste Teilstruktur in dieser Ausführungsform eine Massenfläche der Antennenstruktur aus. Hierbei kann die erste Teilstruktur mit einem Referenzpotential verbunden sein. Allerdings ist es auch vorstellbar, dass die zweite Teilstruktur in dieser Ausführungsform die Massefläche der Antennenstruktur ausbildet, wobei die zweite Teilstruktur mit einem Referenzpotential verbunden sein kann.

Zwischen einem Innenrand der ersten Teilstruktur und einem Außenrand der zweiten Teilstruktur ist ein Zwischenraum bzw. Spalt vorgesehen bzw. angeordnet. Im Zwischenraum bzw. Spalt zwischen den beiden Teilstrukturen kann sich hierbei ein Kopplungsfeld ausbilden.

Hierdurch ergibt sich in vorteilhafter Weise, dass ein auf die Auflagefläche aufgelegtes Mobilfunkgerät, dessen interne Mobilfunkantenne(n) gegenüber diesem Zwischenraum bzw. entlang diesem Zwischenraum positioniert sind, besonders gut, d.h. mit einer besonders geringen Koppeldämpfung koppeln. Es kann hierbei davon ausgegangen werden, dass interne Mobilfunkantennen von Mobilfunkgeräten in der Regel im Randbereich der Mobilfunkgeräte angeordnet sind, wobei ein Akkumulator des Mobilfunkgeräts im zentralen Bereich angeordnet ist. Die vorgeschlagene Vorrichtung kann hierbei vorzugsweise derart ausgebildet sein, dass bei einer Anordnung des Mobilfunkgeräts auf der vorhergehend erläuterten Auflagefläche die zweite Teilstruktur gegenüber bzw. unter dem zentralen Bereich des Mobilfunkgeräts und die erste Teilstruktur gegenüber bzw. unter dem Randbereich des Mobilfunkgeräts angeordnet ist. Hierdurch ergibt sich in vorteilhafter Weise eine besondere gute Kopplung bzw. eine besonders niedrige Dämpfung.

In einer weiteren Ausführungsform variiert ein Abstand zwischen einem Innenrand der ersten Teilstruktur und einem Außenrand der zweiten Teilstruktur entlang des Innenrands der ersten Teilstruktur. Der Abstand kann hierbei z.B. den minimalsten Abstand von einem Punkt an dem Innenrand der ersten Teilstruktur zu einem Punkt des Außenrands der zweiten Teilstruktur bezeichnen. Weiter kann der Abstand in der vorhergehend erläuterten Projektionsebene oder parallel zu dieser Projektionsebene erfasst werden. Der Abstand kann hierbei einen ersten Anteil enthalten, der parallel zu der nachfolgend noch näher erläuterten Längsseite eines Außenrands der ersten Teilstruktur orientiert ist. Weiter kann der Abstand einen weiteren Anteil enthalten, der senkrecht zu der der Längsseite und somit parallel zu einer Stirnseite eines Außenrands der ersten Teilstruktur orientiert ist. Hierbei kann/können entlang des Innenrands der erste und/oder der weitere Anteil variieren.

Entlang des Innenrands kann beispielsweise bedeuten, dass Punkte, die entlang des Innenrands der ersten Teilstruktur in mathematisch positiver Richtung hintereinander angeordnet sind, betrachtet werden, wobei die mathematisch positive Richtung mit Bezug auf die vorhergehend erläuterte zentrale Achse der Windungsstruktur, die von der Windungsstruktur hin zu der ersten und/oder zweiten Teilstruktur orientiert ist, definiert ist.

Hierbei kann der Abstand entlang des gesamten Innenrands größer als Null sein. Allerdings ist es auch möglich, dass der Abstand an einzelnen Punkten oder Abschnitten des Innenrands Null ist. In diesem Fall kann ein elektrischer Kontakt zwischen erster und zweiter Teilstruktur gegeben sein. Dies ist aber nicht zwingend, insbesondere wenn beide Teilstrukturen in verschiedenen Ebenen angeordnet sind.

Durch den variierenden Abstand ergibt sich in vorteilhafter Weise, dass entlang des Innenrands verschiedene Kopplungsbereiche ausgebildet werden können, wobei verschiedene Kopplungsbereiche für verschiedenen Frequenzen bzw. Frequenzbereichen verschieden gut koppeln. Dies bedeutet, dass für einen oder mehrere Punkt(e) oder Abschnitt(e) entlang des Innenrands ein Kopplungsfaktor für ein Signal mit einer bestimmten Frequenz oder aus einem bestimmten Frequenzbereich höher sein kann als in den verbleibenden Punkten oder Abschnitten. In einem oder mehreren weiteren Punkt(en) oder Abschnitt(en) entlang des Innenrands kann dann ein Kopplungsfaktor für ein Signal mit einer weiteren Frequenz oder einen aus einem weiteren Frequenzbereich höher sein als in den verbleibenden Punkten oder Abschnitten.

In einer weiteren Ausführungsform weist ein Außenrand der ersten Teilstruktur einen im Wesentlichen oder genau rechteckigförmigen Verlauf auf, wobei der Abstand zwischen einem Innenrand der ersten Teilstruktur und einem Außenrand der zweiten Teilstruktur in einem Teilbereich, der sich entlang oder parallel zu einer Längsseite der ersten Teilstruktur erstreckt, derart gewählt ist, dass Signale in einem ersten Teilfrequenzbereich empfangbar und sendbar sind. Weiter ist der Abstand zwischen einem Innenrand der ersten Teilstruktur und einem Außenrand der zweiten Teilstruktur in einem Teilbereich, der sich entlang oder parallel zu einer Stirnseite der ersten Teilstruktur erstreckt, derart gewählt, dass Signale in einem weiteren Teilfrequenzbereich empfangbar und sendbar sind. Im Wesentlichen rechteckförmig umfasst hierbei auch Ausführungsformen, bei denen der Verlauf des Außenrands mindestens eine Ausnehmung, z.B. Eindellungen, oder mindestens eine Ausbuchtung aufweisen kann. Hierdurch kann die erste Teilstruktur beispielsweise an ein Montagekonzept oder an einen verfügbaren Bauraum angepasst werden. Die Teilfrequenzbereiche können voneinander verschieden sein.

Die Teilbereiche können hierbei Bereiche der Innenfläche bezeichnen, insbesondere Randbereiche der Innenfläche.

Insbesondere kann der Abstand zwischen einem Innenrand der ersten Teilstruktur und einem Außenrand der zweiten Teilstruktur in einem Teilbereich, der sich entlang oder parallel zu einer Längsseite der ersten Teilstruktur erstreckt, derart gewählt sein, dass Signale in den Frequenzbereichen der Mobilfunkstandards GSM850 und/oder GSM900, insbesondere mit einem vorbestimmten Koppelfaktor, empfangbar und sendbar sind. Weiter kann der Abstand zwischen einem Innenrand der ersten Teilstruktur und einem Außenrand der zweiten Teilstruktur in einem Teilbereich, der sich entlang oder parallel zu einer Stirnseite der ersten Teilstruktur erstreckt, derart gewählt sein, dass Signale in den Frequenzbereichen der Mobilfunkstandards GSM1800 und/oder UMTS2100, insbesondere mit einem vorbestimmten Koppelfaktor, empfangbar und sendbar sind.

Hierdurch ergibt sich in vorteilhafter Weise, dass Bereiche, die für verschiedene Frequenzen verschieden gut koppeln, räumlich voneinander getrennt angeordnet sind. Die Anordnung kann hierbei insbesondere derart erfolgen, dass die Anordnung der Bereich an eine Anordnung von Koppelelementen eines in einer vorbestimmten Orientierung auf die Auflagefläche angeordneten Mobiltelefons angepasst ist.

In einer weiteren Ausführungsform weist die erste Teilstruktur entlang des Innenrands und/oder die zweite Teilstruktur entlang des Außenrands mindestens einen Vorsprung auf. Die zweite Teilstruktur kann hierbei den mindestens einen Vorsprung in dem Teilbereich aufweisen, der sich parallel zu einer Längsseite der ersten Teilstruktur erstreckt oder dieser Längsseite zugewandt ist. Vorzugsweise weist die zweite Teilstruktur den mindestens einen Vorsprung in dem Teilbereich auf, der sich parallel zu einer Stirnseite der ersten Teilstruktur erstreckt oder dieser Stirnseite zugewandt ist.

Ein Vorsprung bezeichnet hierbei einen, insbesondere hervorstehenden oder hervorspringenden, Teilbereich der Teilstruktur, der von einem zentralen Bereich oder Hauptbereich des Teilkörpers, in Richtung der jeweils anderen Teilstruktur absteht. Der Teilbereich des Vorsprungs einer Teilstruktur kann sich hierbei hin zu der jeweils anderen Teilstruktur verbreitern oder verjüngen. Die jeweils andere Teilstruktur kann zu den Vorsprüngen korrespondierende Ausnehmungen oder Ausbuchtungen aufweisen, in die sich die Vorsprünge und Untervorsprünge hinein erstrecken.

Der Innenrand der ersten Teilstruktur und der Außenrand der zweiten Teilstruktur können z.B. jeweils aus geradlinigen Abschnitten bestehen, die mit vorbestimmten Winkeln aneinander angrenzen. Hierbei kann eine Grund-Umfangslinie der zweiten Teilstruktur ein einfaches, konvexes Polygon umfassen oder bilden, wobei ein geometrischer Mittelpunkt des Polygons gleich dem geometrischen Mittelpunkt der zweiten Teilstruktur sein kann. Durch den mindestens einen Vorsprung umfasst oder bildet die tatsächliche Umfangslinie ein nichtkonvexes Polygon. Dies bedeutet, dass durch den mindestens einen Vorsprung die Umfangslinie der zweiten Teilstruktur von der Umfangslinie eines einfachen, konvexen Polygons in die Umfangslinie eines nichtkonvexen Polygons geändert wird.

Ein Vorsprung kann wiederum mindestens einen weiteren Untervorsprung umfassen. Hierbei kann eine Grund-Umfangslinie des Vorsprungs ein einfaches, konvexes Polygon umfassen oder bilden, wobei ein geometrischer Mittelpunkt des Polygons gleich dem geometrischen Mittelpunkt des Vorsprungs sein kann. Durch den mindestens einen Untervorsprung umfasst oder bildet die tatsächliche Umfangslinie des Vorsprungs ein nichtkonvexes Polygon. Dies bedeutet, dass durch den mindestens einen Vorsprung die Umfangslinie des Vorsprungs von der Umfangslinie eines einfachen, konvexen Polygons in die Umfangslinie eines nichtkonvexen Polygons geändert wird.

Entsprechende Ausführungen können für die von der ersten Teilstruktur begrenzte Innenfläche gelten, wobei der Innenrand der ersten Teilstruktur beispielsweise derart ausgebildet ist, dass eine Grund-Umfangslinie der Innenfläche ein einfaches, konvexes Polygon umfasst oder bildet, wobei ein geometrischer Mittelpunkt des Polygons gleich dem geometrischen Mittelpunkt der Innenfläche sein kann. Durch den mindestens einen Vorsprung umfasst oder bildet die tatsächliche Umfangslinie ein nichtkonvexes Polygon. Ein Vorsprung kann auch in diesem Fall wiederum mindestens einen weiteren Untervorsprung umfassen.

Beispielsweise kann der Vorsprung der zweiten Teilstruktur durch einen geradlinigen Anfangsabschnitt und Endabschnitt entlang des entsprechenden Innenrands oder Außenrands der Teilstruktur und alle dazwischen liegenden geradlinige Abschnitte umfasst sein, wobei der Anfangsabschnitt mit dem entlang des Rands vorhergehenden geradlinigen Abschnitt einen Winkel kleiner als 180°, insbesondere kleiner als 90°, einschließt, wobei der Winkel ausgehend vom vorhergehenden Abschnitt in mathematisch positiver Richtung gemessen wird. Der Endabschnitt kann mit dem entlang des Rands nachfolgenden geradlinigen Abschnitt ebenfalls einen Winkel kleiner als 180°, insbesondere kleiner als 90°, einschließen. Die Winkel zwischen den Anfangsabschnitt und Endabschnitt und allen gegebenenfalls dazwischenliegenden Abschnitten können insbesondere größer als 180° sein.

Durch den mindestens einen Vorsprung wird insbesondere eine Länge der tatsächlichen Umfangslinie der zweiten Teilstruktur bzw. der Innenfläche im Vergleich zur Länge der Grund-Umfangslinie Umfang erhöht. Hierdurch kann auch der für die Kopplung wesentliche Zwischenraum bzw. Spalt zwischen den beiden Teilstrukturen verlängert werden. Weiter kann durch den mindestens einen Vorsprung ein räumlicher Verlauf bzw. eine räumliche Anordnung des Zwischenraums derart angepasst werden, dass eine gewünschte Kopplungsfähigkeit in vorbestimmten räumlichen Bereichen der Teilstrukturen gewährleistet wird.

In einer weiteren Ausführungsform sind die erste Teilstruktur und die zweite Teilstruktur galvanisch oder signalleitend, insbesondere hochfrequenzsignalleitend, verbunden. Insbesondere können die erste Teilstruktur und die zweite Teilstruktur im Bereich einer Stirnseite der ersten Teilstruktur galvanisch oder signalleitend verbunden sein. Die galvanische oder signalleitende Verbindung kann insbesondere in Form einer Durchkontaktierung oder über eine Randkontaktierung gegeben sein, insbesondere falls die erste Teilstruktur und die zweite Teilstruktur auf voneinander verschiedenen Seiten einer Leiterplatte angeordnet sind.

Im Bereich der galvanischen Kontaktierung fließt ein im Vergleich zu weiteren Teilbereichen der ersten und zweiten Teilstruktur erhöhter Strom, wodurch sich wiederum eine Abstrahleistung in diesem Bereich und somit eine Kopplungsfähigkeit erhöhen kann. Sind die erste und die zweite Teilstruktur galvanisch verbunden, so kann die erste Teilstruktur mit dem vorhergehend erläuterten Referenzpotential verbunden sein und/oder eine Massefläche ausbilden.

Selbstverständlich ist es auch möglich, dass die erste und die zweite Teilstruktur nicht galvanisch verbunden sind oder nicht signalleitend verbunden sind. In diesem Fall kann insbesondere die zweite Teilstruktur mit dem vorhergehend erläuterten Referenzpotential verbunden sein und/oder eine Massefläche ausbilden.

In einer weiteren Ausführungsform ist die erste Teilstruktur der Antennenstruktur kelchförmig ausgebildet.

Dies bedeutet, dass die erste Teilstruktur in einer Ebene, in der die erste Teilstruktur angeordnet ist, oder in der vorhergehend erläuterten Projektionsebene einen kelchförmigen Querschnitt aufweist. Hierbei kann sich der kelchförmige Querschnitt von einem ersten Ende der ersten Teilstruktur hin zu einem dem ersten Ende gegenüberliegenden Ende verjüngen. Das dem ersten Ende gegenüberliegende Ende kann insbesondere das einer Massefläche der Antennenstruktur zugewandte Ende der ersten Teilstruktur sein.

Die der ersten Teilstruktur zugeordnete Massefläche kann beispielsweise durch eine von der ersten und zweiten Teilstruktur verschiedene Struktur ausgebildet werden. Verjüngt sich der Querschnitt der ersten Teilstruktur in der Projektionsebene hin zur Massefläche, so kann sich die die Massefläche ausbildende Struktur hin zur ersten Teilstruktur ebenfalls verjüngen oder konstante Abmaße aufweisen.

Es ist jedoch auch möglich, dass die erste Teilstruktur konstante Abmaße aufweist, z.B. in der Projektionsebene einen Querschnitt mit konstanten Abmaßen aufweist, und sich die die Massefläche ausbildende Struktur hin zur ersten Teilstruktur verjüngt.

Bildet die zweite Teilstruktur zumindest einen Teil der Massefläche aus, so kann sich der kelchförmige Querschnitt auch hin zur zweiten Teilstruktur verjüngen.

Der kelchförmige Querschnitt kann hierbei dreieckförmig ausgebildet sein. Hierbei kann die erste Teilstruktur derart ausgebildet oder angeordnet sein, dass eine Spitze des Dreiecks hin zur Massefläche, die der ersten Teilstruktur zugeordnet ist, orientiert ist. In diesem Fall ist eine Grundseite des Dreiecks auf einer Seite der ersten Teilstruktur angeordnet, die der Seite des Dreiecks gegenüberliegt, die der Massefläche, die der ersten Teilfläche zugeordnet ist, zugewandt ist. Die verbleibenden beiden Schenkel des Dreiecks können sich in einem vorbestimmten Winkel von der Grundseite hin zur Massefläche erstrecken, wobei z.B. eine Spitze des Dreiecks an die Massefläche angrenzt oder mit einem vorbestimmten Abstand benachbart zur Massefläche angeordnet ist. Die Grundseite und die Schenkel bilden hierbei Randabschnitte der ersten Teilstruktur.

Alternativ kann der kelchförmige Querschnitt teilkreisförmig, z.B. halbkreisförmig, ausgebildet sein. Hierbei kann der kreisförmige Randabschnitt der ersten Teilstruktur der Massefläche zugewandt sein, wodurch sich die erste Teilstruktur hin zur Massefläche verjüngt.

Weiter alternativ kann der kelchförmige Querschnitt teilelliptisch ausgebildet sein bzw. eine Form einer Teilellipse aufweisen. Hierbei kann der elliptische Randabschnitt der ersten Teilstruktur der Massefläche zugewandt sein, wodurch sich die erste Teilstruktur hin zur Massefläche verjüngt.

Hierbei ist der variierende Abstand der Randabschnitte des sich verjüngenden Teils der ersten Teilstruktur zu einem Randabschnitt der der ersten Teilstruktur zugeordneten Massefläche, beispielsweise der von der zweiten Teilstruktur ausgebildeten Massefläche, maßgeblich für das Empfangen und Senden von Signalen mit Frequenzen aus dem vorhergehend erläuterten Frequenzbereich.

Durch die kelchförmige Ausbildung der ersten Teilstruktur ergibt sich in vorteilhafter Weise eine qualitativ hochwertige Übertragung von Signalen durch die erste Teilstruktur.

In einer weiteren Ausführungsform ist die Dämpfungsstruktur zumindest teilweise kammförmig ausgebildet. Die Zähne der kammförmigen Dämpfungsstruktur können hierbei beispielsweise in der Projektionsebene parallel und/oder senkrecht zu dem vorhergehend erläuterten geraden Randabschnitt der ersten Teilstruktur mit einem vorbestimmten Abstand von diesem geraden Randabschnitt angeordnet sein. Die Dämpfungsstruktur kann hierbei doppelkammförmig ausgebildet sein, wobei sich Zähne zu beiden Seiten von einem zentralen Verbindungssteg, insbesondere senkrecht zu diesem, weg erstrecken. Selbstverständlich ist es auch vorstellbar, dass die Dämpfungsstruktur einzelkammförmig ausgebildet ist, wobei sich nur zu einer Seite eines zentralen Steges Zähne der Dämpfungsstruktur weg erstrecken oder wobei Zähne zwischen zwei parallel verlaufenden und beabstandet voneinander angeordneten Stegen angeordnet sind.

Ein weiterer Teil der Dämpfungsstruktur kann flächig ausgebildet sein, um Eigenschaften der zweiten Teilstruktur als Massefläche zu verbessern. Beispielsweise kann mindestens ein weiterer Teil der Dämpfungsstruktur flächig ausgebildet sein und eine vorbestimmte Fläche, beispielsweise 300 mm², umfassen.

Dies ermöglicht in vorteilhafter Weise eine möglichst einfache Ausbildung der Dämpfungsstruktur, wobei gleichzeitig eine möglichst effektive Dämpfung des elektrischen Feldes des elektromagnetischen Feldes erreicht wird.

In einer weiteren Ausführungsform umfasst die Dämpfungsstruktur mindestens ein kapazitives Element, wobei durch das kapazitive Element zumindest zwei Teilabschnitte der Dämpfungsstruktur elektrisch verbunden sind. Zwei voneinander mit einem vorbestimmten Abstand beabstandete Teilabschnitte der Dämpfungsstruktur können durch das kapazitive Element, beispielsweise einen Kondensator, elektrisch verbunden werden. Insbesondere können zwei benachbarte Zähne einer kammförmigen Dämpfungsstruktur mittels des kapazitiven Elements elektrisch verbunden sein. In diesem Fall kann das kapazitive Element beispielsweise zwischen freien Enden von benachbarten Zähnen angeordnet sein, wobei ein freies Ende eines Zahns ein Ende des Zahns bezeichnet, welches gegenüberliegend von einem weiteren Ende des Zahns angeordnet ist, der an den vorhergehend erläuterten Verbindungssteg angrenzt.

Eine Impedanz des kapazitiven Elements kann bei Frequenzen, die über einer vorbestimmten Grenzfrequenz, beispielsweise 600 MHz, liegen, kleiner als eine vorbestimmte Impedanz sein. Hierdurch kann bei hohen Frequenzen, insbesondere Frequenzen, die höher als die vorhergehend erläuterte Grenzfrequenz sind, eine möglichst ununterbrochene Massefläche bereitgestellt werden, wobei bei niedrigen Frequenzen eine Dämpfung des magnetischen Feldes des elektromagnetischen Feldes durch Wirbelströme aufgrund von Unterbrechungen in der Massefläche minimiert wird.

In einer weiteren Ausführungsform umfasst die Antennenstruktur mindestens eine weitere Teilstruktur, wobei die weitere Teilstruktur derart ausgebildet und/oder gegenüber der zweiten Teilstruktur angeordnet ist, dass mittels der weiteren Teilstruktur Signale in einem zweiten vorbestimmten Frequenzbereich empfangbar und sendbar sind. Der zweite vorbestimmte Frequenzbereich kann hierbei gleich dem ersten vorbestimmten Frequenzbereich sein. Vorzugsweise ist er jedoch von dem ersten vorbestimmten Frequenzbereich verschieden.

Der zweite Frequenzbereich kann hierbei beispielsweise Frequenzen zwischen 1400 MHz (einschließlich) bis 2600 MHz (einschließlich) umfassen. Hierbei ist der zweite Frequenzbereich von dem ersten Frequenzbereich verschieden. Jedoch können sich die Frequenzbereiche zumindest teilweise überschneiden.

Die weitere Teilstruktur ist, wie die erste Teilstruktur, in einer Projektionsebene, die senkrecht zu einer zentralen Achse der Windungsstruktur orientiert ist, benachbart zu der mindestens einen Windungsstruktur angeordnet.

Hierbei gelten die Ausführungen zur ersten Teilstruktur für die weitere Teilstruktur entsprechend. Beispielsweise kann auch die weitere Teilstruktur kelchförmig ausgebildet sein.

Insbesondere ist es möglich, dass die erste Teilstruktur und die weitere Teilstruktur auf gegenüberliegenden Seiten der zweiten Teilstruktur angeordnet sind. Hierdurch ergibt sich in vorteilhafter Weise ein symmetrischer Antennenaufbau. Die beiden Teilstrukturen können beispielsweise als sich gegenüberstehende Kelche, z.B. sich gegenüberstehende Halbkreise, Halb-Ellipsen oder gegenüberstehende Dreiecke, deren Spitzen einander gegenüberstehen, ausgebildet sein, wobei sich die verjüngenden Teile der ersten und weiteren Teilstruktur zueinander hin verjüngen.

Umfasst die vorgeschlagene Vorrichtung eine Dämpfungsstruktur, so kann diese sowohl mit der ersten als auch mit der weiteren Teilstruktur elektrisch verbunden sein. Jedoch ist eine elektrische Verbindung nicht zwingend notwendig.

Das Vorsehen einer weiteren Teilstruktur ermöglicht eine weitere Verbesserung einer signaltechnischen Kopplung zwischen der Antennenstruktur und z.B. einem portablen Endgerät, wobei trotzdem nur ein geringer Bauraum benötigt wird. So ist es möglich, eine sogenannte Doppelkelch-Struktur in enger Nachbarschaft zur Windungsstruktur und dem zur Windungsstruktur gehörigen Komponenten, wie z.B. einem Ferritkern, einem Kühlkörper bzw. der vorhergehend erläuterten Dämpfungsstruktur, zu platzieren, wobei trotzdem noch eine ausreichend gute signaltechnische Kopplung möglich ist.

Weiter ist es möglich, dass die erste und/oder die weitere Teilstruktur eine zusätzliche Blindleiter-Struktur umfasst oder aufweist. Alternativ oder kumulativ kann auch eine der ersten und/oder der weiteren Teilstruktur zugeordnete Massefläche eine Blindleiter-Struktur umfassen oder aufweisen. Die Blindleiter-Struktur kann auch als Stichleitungs-Struktur bezeichnet werden oder eine Stichleitungs-Struktur umfassen.

Die Blindleiter-Struktur kann auch als sogenannte Stub-Struktur bezeichnet werden. Die Blindleiter-Struktur kann beispielsweise streifenförmig ausgebildet sein. Weiter beispielsweise kann die Blindleiter-Struktur aus Kupfer bestehen. Es ist möglich, dass die Blindleiter-Struktur sich, insbesondere in der Projektionsebene, senkrecht zu einer Achse erstreckt, die die erste und die weitere Teilstruktur verbindet. Hierbei kann die Blindleiter-Struktur auf der sich verjüngenden Seite der jeweiligen Teilstruktur angeordnet sein. Auch ist es möglich, dass die Blindleiter-Struktur sich auf der Seite der Teilstruktur befindet, die der sich verjüngenden Seite der Teilstruktur gegenüberliegt. So kann die Blindleiter-Struktur auf einer der Massefläche abgewandten Seite der jeweiligen Teilstruktur angeordnet sein. Die Blindleiter-Struktur kann hierbei parallel zu dem vorhergehend erläuterten geraden Randabschnitt der entsprechenden Teilleiterstruktur verlaufen.

Weiter kann die Blindleiter-Struktur elektrisch mit der entsprechenden Teilstruktur, also entweder der ersten oder der weiteren Teilstruktur oder der Massefläche, verbunden werden. Wie vorhergehend erläutert, kann sich die Blindleiter-Struktur in der Projektionsebene senkrecht zur zentralen Achse der Windungsstruktur erstrecken. Weiter kann sie derart angeordnet sein, dass sie in der Projektionsebene angrenzend zur Windungsstruktur oder mit einem vorbestimmten Abstand benachbart zur Windungsstruktur angeordnet ist.

Die Länge der Blindleiter-Struktur kann derart gewählt werden, dass die Antennenstruktur in einem mittleren Frequenzbereich, beispielsweise in einem Frequenzbereich von 880 MHz bis 960 MHz (GSM 900-Standard) eine zusätzliche Resonanzfrequenz aufweist. Selbstverständlich kann die Länge der Blindleiter-Struktur derart angepasst werden, dass die Antennenstruktur zusätzliche Resonanzfrequenzen in anderen Frequenzbereichen, beispielsweise in Frequenzbereichen der Mobilfunkbänder GSM 850, LTE700, LTE800 ausbildet. Die Länge bezeichnet hierbei eine Dimension entlang einer Längsrichtung der Blindleiter-Struktur, insbesondere einer streifenförmigen Blindleiter-Struktur.

Durch die zusätzliche Blindleiter-Struktur kann somit in vorteilhafter Weise eine gute signaltechnische Kopplung auch in dem entsprechenden Frequenzbereich ermöglicht werden.

Weist die vorgeschlagene Vorrichtung nur eine Blindleiter-Struktur auf, so kann diese mit Bezug auf die zentrale Achse in der Projektionsebene entweder auf der Seite der ersten Teilstruktur oder auf der Seite der weiteren Teilstruktur angeordnet sein. Es ist jedoch auch möglich, dass die Vorrichtung zwei Blindleiter-Strukturen umfasst, wobei eine erste Blindleiter-Struktur mit der ersten Teilstruktur und eine weitere Blindleiter-Struktur mit der weiteren Teilstruktur elektrisch verbunden und auf der jeweiligen Seite angeordnet ist. Somit können die beiden Blindleiter-Strukturen in der Projektionsebene sowohl rechts als auch links bzw. oben und unten benachbart zu der Windungsstruktur angeordnet sein.

Hierbei können die Blindleiter-Strukturen mit der jeweiligen Teilstruktur bzw. mit einer Massefläche mittels eines steuerbaren Schaltelements, beispielsweise eines Hochfrequenz-Schalters, weiter beispielsweise einer so genannten PIN-Diode, verbunden sein. In einem geschlossenen Zustand ist die jeweilige Blindleiter-Struktur mit der entsprechenden Teilstruktur bzw. der Massefläche elektrisch verbunden. In einem geöffneten Zustand ist die jeweilige Blindleiter-Struktur galvanisch von der entsprechenden Teilstruktur bzw. Massefläche getrennt.

Hierbei ist es möglich, die Schaltelemente derart in Abhängigkeit einer Orientierung und/oder eines Aufbaus eines auf die Auflagefläche aufgelegten Endgeräts anzusteuern, dass ausschließlich eine der beiden Blindleiter-Strukturen mit der entsprechenden Teilstruktur bzw. der Massefläche elektrisch verbunden ist. Eine Orientierung des Endgerätes kann beispielsweise über eine NFC-Abfrage ermittelt werden. Aus der NFC-Abfrage kann beispielsweise dann ein Endgerätetypus bestimmt werden.

Alternativ ist es vorstellbar, dass eine Länge der Blindleiter-Struktur variabel ist. Beispielsweise kann die Blindleiter-Struktur mehrere Leitersegmente umfassen, die jeweils über ein Schaltelement miteinander elektrisch verbindbar sind. Durch Schließen der Schaltelemente kann somit eine gewünschte Länge der Blindleiter-Struktur eingestellt werden. Hierdurch können in vorteilhafter Weise Resonanzfrequenzen der Antennenstruktur verändert oder eingestellt werden. Beispielsweise kann auf diese Weise die Antennenstruktur auf einen Empfang von Frequenzen im Bereich von GSM 900, welche in Europa üblich sind, auf einen Empfang in den Frequenzbereich von GSM 850, welche in den USA üblich ist, umgeschaltet werden. Hierbei können Segmente von außen beginnend zu- oder abgeschaltet werden.

Es ist jedoch auch vorstellbar, dass die Blindleiter-Struktur mehrere Segmente umfasst, wobei eine vorbestimmte Anzahl von Segmenten mittels elektrischen Verbindungsmitteln verbunden ist. Hierdurch kann beispielsweise schon bei der Herstellung eine Resonanzfrequenz der Antennenstruktur angepasst werden, wobei diese nachfolgend nicht mehr veränderbar ist.

Umfasst die vorgeschlagene Vorrichtung eine erste und eine weitere Teilstruktur, so kann eine asymmetrische oder symmetrische Einspeisung eines Signals erfolgen.

Beispielsweise kann ein Signal symmetrisch zwischen der ersten und der weiteren Teilstruktur eingekoppelt werden. Hierzu kann es erforderlich sein, ein üblicherweise vorliegendes asymmetrisches, z.B. über ein Koaxialkabel geführtes, Signal zu symmetrieren. Dies ist z.B. mit einer sogenannten Balun-Einrichtung möglich.

Es ist jedoch auch möglich, eine asymmetrische Einkopplung vorzusehen. Hierbei kann eine zusätzliche Leiterstruktur vorgesehen werden, die sich von einer der beiden Teilstrukturen zu der anderen Teilstruktur, z.B. von einer der zweiten Teilstruktur zugewandten Spitze der ersten Teilstruktur zur zweiten Teilstruktur, über einen schmalen Spalt zwischen den beiden Teilstrukturen hinweg und über eine gesamte Länge der jeweils anderen Teilstruktur erstreckt. Hierzu kann es erforderlich sein, dass die die Teilstrukturen entlang der zentralen Achse mit einem vorbestimmten Abstand versetzt zueinander angeordnet sind.

Beispielsweise kann dann, abhängig von einem Material einer Leiterplatte und von einer Dicke der Leiterplatte, die Leiterstruktur als sogenannte Microstrip-Leitung mit einer vorbestimmten Impedanz, beispielsweise 50 Ohm, ausgeführt sein. In diesem Fall kann z.B. die andere, insbesondere die zweite, Teilstruktur als Massefläche für die über diese Microstrip-Leitung angebundene erste Teilstruktur dienen. In diesem Fall kann beispielsweise ein Leitungsschirm eines Koaxialkabels, über welches das zu übermittelnde Signal eingespeist wird, mit einem Randabschnitt der anderen Teilstruktur elektrisch verbunden werden, wobei eine Kabelseele des Koaxialkabels mit der vorhergehend erläuterten Leiterstruktur, beispielsweise der Microstrip-Leitung, elektrisch verbunden wird.

Weiter vorgeschlagen wird ein Verfahren zur kombinierten Signalübertragung oder zur kombinierten Signal- und Energieübertragung, insbesondere zu einem portablen elektronischen Endgerät. Hierbei erzeugt mindestens eine Windungsstruktur ein erstes elektromagnetisches Feld zur Energie- oder Signalübertragung. Eine Antennenstruktur empfängt oder sendet Signale, wobei die Antennenstruktur eine erste Teilstruktur und eine zweite Teilstruktur umfasst. Die erste Teilstruktur ist derart ausgebildet und/oder gegenüber der zweiten Teilstruktur angeordnet, dass mittels der Antennenstruktur Signale in einem ersten Frequenzbereich empfangbar und sendbar sind.

Weiter ist zumindest die erste Teilstruktur in einer Projektionsebene, die senkrecht zu einer zentralen Achse der Windungsstruktur orientiert ist, benachbart zu der mindestens einen Windungsstruktur angeordnet.

Das Verfahren ist hierbei mit einer Vorrichtung gemäß einer der vorhergehend erläuterten Ausführungsformen durchführbar.

Sowohl bei der Signal- als auch bei der Energieübertragung mittels der ersten Windungsstruktur, insbesondere auch im Falle einer NFC, wird elektrische Energie drahtlos, nämlich über das elektromagnetische Feld, übertragen. Im Falle der NFC wird z.B. Energie übertragen, damit eine Transpondereinrichtung einer NFC-Einrichtung mit Energie versorgt wird, wodurch diese in der Lage ist, eine Information zurück an den entsprechenden Sender der NFC-Einrichtung zu übertragen. In diesem Fall bezeichnet die Transpondereinrichtung eine passive Baugruppe, beispielsweise bestehend aus einer NFC-Antennenstruktur und einem Microchip.

Die Erfindung wird anhand eines Ausführungsbeispiels näher erläutert. Die Figuren zeigen:
- Fig. 1: eine schematische Seitenansicht einer erfindungsgemäßen Vorrichtung;
- Fig. 2: eine schematische Draufsicht auf die in Fig. 1 dargestellte Vorrichtung,
- Fig. 3: eine weitere Draufsicht auf die in Fig. 1 dargestellte Vorrichtung,
- Fig. 4: eine Draufsicht auf eine erfindungsgemäße Vorrichtung in einer weiteren Ausführungsform,
- Fig. 5: eine Draufsicht auf eine erfindungsgemäße Vorrichtung in einer weiteren Ausführungsform,
- Fig. 6: eine Draufsicht auf eine erfindungsgemäße Vorrichtung in einer weiteren Ausführungsform,
- Fig. 7: eine Draufsicht auf eine erfindungsgemäße Vorrichtung in einer weiteren Ausführungsform und
- Fig. 8: eine Draufsicht auf eine erfindungsgemäße Vorrichtung in einer weiteren Ausführungsform.

Nachfolgend bezeichnen gleiche Bezugszeichen Elemente mit gleichen oder ähnlichen technischen Merkmalen.

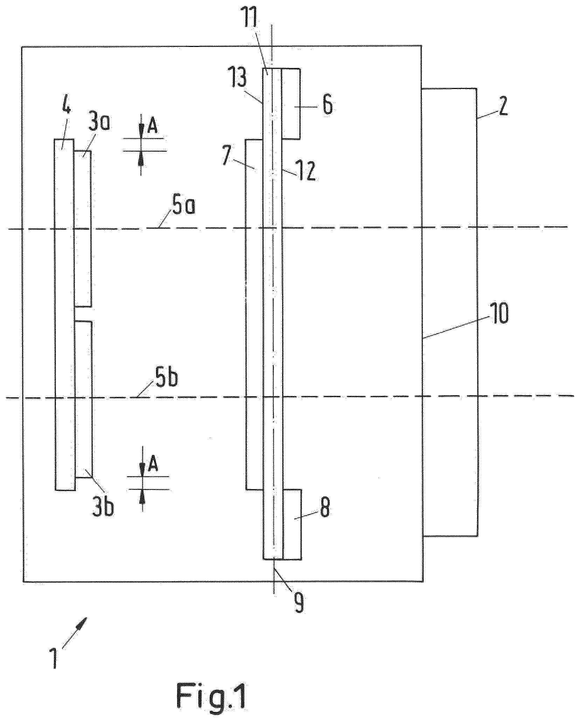

In Fig. 1 ist eine Vorrichtung 1 zur kombinierten Signal- und Energieübertragung zu einem portablen elektronischen Endgerät 2 dargestellt. Die Vorrichtung 1 umfasst eine erste Windungsstruktur 3a und eine zweite Windungsstruktur 3b. Mittels der ersten und zweiten Windungsstruktur 3a, 3b ist ein erstes elektromagnetisches Feld zur Energieübertragung erzeugbar. Die erste und die zweite Windungsstruktur 3a, 3b sind hierbei auf einer ersten Leiterplatte 4 angeordnet. Die erste Windungsstruktur 3a weist hierbei eine zentrale Achse 5a auf. Die zweite Windungsstruktur 3b weist eine zentrale Achse 5b auf, wobei die zentralen Achsen 5a, 5b parallel verlaufen.

Weiter umfasst die Vorrichtung 1 eine Antennenstruktur, wobei die Antennenstruktur eine erste Teilstruktur 6, eine zweite Teilstruktur 7 und eine weitere Teilstruktur 8 umfasst. Die erste Teilstruktur 6 und die weitere Teilstruktur 8 sind derart ausgebildet und gegenüber der zweiten Teilstruktur 7 angeordnet, dass mittels der ersten und weiteren Teilstruktur 6, 8 Signale aus einem Frequenzbereich von 700 MHz bis 2600 MHz empfangbar und sendbar sind.

Weiter ist durch eine Strichpunktlinie eine Projektionsebene 9 dargestellt, die senkrecht zu den zentralen Achsen 5a, 5b der Windungsstrukturen 3a, 3b orientiert ist. Hierbei ist dargestellt, dass die erste Teilstruktur 6 in der Projektionsebene 9 mit einem Abstand A von der ersten Windungsstruktur 3a beabstandet angeordnet ist. Entsprechend ist die weitere Teilstruktur in der Projektionsebene 9 mit dem vorbestimmten Abstand A von der zweiten Windungsstruktur 3b angeordnet. Der vorbestimmte Abstand A bezeichnet hierbei einen minimalen Abstand zwischen Randabschnitten der Teilstrukturen 6, 8 und den Windungsstrukturen 3a, 3b in der Projektionsebene 9.

Die Vorrichtung 1 umfasst weiter eine Auflagefläche 10, auf der das portable Endgerät 2 aufgelegt ist. Die Auflagefläche 10 ist hierbei ebenfalls senkrecht zu den zentralen Achsen 5a, 5b der Windungsstrukturen 3a, 3b angeordnet.

Die Teilstrukturen 6, 7, 8 sind auf einer weiteren Leiterplatte 11 angeordnet, wobei die erste und weitere Teilstruktur 6, 8 auf einer Seite 12 der weiteren Leiterplatte 11 angeordnet sind, die einer weiteren Seite 13 der Leiterplatte 11 gegenüberliegt, wobei die weitere Seite 13 die der ersten Leiterplatte 4 zugewandte Seite der weiteren Leiterplatte 11 ist. Die zweite Teilstruktur 7 ist auf der weiteren Seite 13 der weiteren Leiterplatte 11 angeordnet.

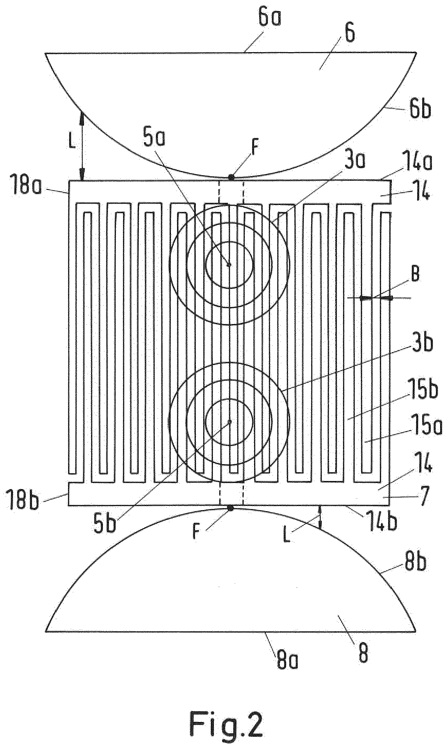

Wie in Fig. 2 detailliert dargestellt, ist die zweite Teilstruktur 7 als Dämpfungsgitter ausgebildet.

In Fig. 2 ist eine schematische Draufsicht auf die in Fig. 1 dargestellte Vorrichtung 1 dargestellt. Insbesondere ist dargestellt, dass die erste und die weitere Teilstruktur 6, 8 kelchförmig ausgebildet sind, wobei die erste und weitere Teilstruktur 6, 8 einen teilkreisförmigen Querschnitt aufweisen. Eine Querschnittsebene ist hierbei senkrecht zu den zentralen Achsen 5a, 5b orientiert. Die erste und die weitere Teilstruktur 6, 8 weisen jeweils einen geraden Randabschnitt 6a, 8a auf, wobei der gerade Randabschnitt 6a, 8a auf einer von der zweiten Teilstruktur 7 abgewandten Seite der jeweiligen Teilstruktur 6, 8 angeordnet ist. Entsprechend weisen die erste und die weitere Teilstruktur einen kreisförmigen Randabschnitt 6b, 8b auf, wobei dieser Randabschnitt 6b, 8b auf der der zweiten Teilstruktur 7 zugewandten Seite der jeweiligen Teilstruktur 6, 8 angeordnet ist. Somit verjüngen sich die erste als auch die weitere Teilstruktur 6, 8 hin zur zweiten Teilstruktur 7.

Die zweite Teilstruktur 7 weist eine rechteckförmige Einhüllende auf. Die das Dämpfungsgitter ausbildendende zweite Teilstruktur 7 umfasst eine erste Kammstruktur 18a und eine zweite Kammstruktur 18b. Die erste Kammstruktur 18a umfasst einen Verbindungssteg 14a und Zähne 15a. Die zweite Kammstruktur 18b umfasst einen Verbindungssteg 14b und Zähne 15b. Der Einfachheit halber ist jeweils nur ein Zahn 15a, 15b mit einem Bezugszeichen versehen. Die erste und die zweite Kammstruktur 18a, 18b sind hierbei derart relativ zueinander angeordnet, dass die Zähne 15a, 15b ineinandergreifen. Dies bedeutet, dass sich Zähne 15a in Zahnzwischenräume der Zähne 15b und umgekehrt erstrecken. Wesentlich ist, dass die Zähne 15a der ersten Kammstruktur 18a die zweite Kammstruktur 18b nicht elektrisch kontaktieren oder elektrisch verbunden sind. Ebenso kontaktieren Zähne 15b der zweiten Kammstruktur 18b nicht die erste Kammstruktur 18a.

Vorstellbar ist aber auch, dass alle Zähne 15a, 15b ausschließlich an einem der beiden Verbindungsstege 14a, 14b angeordnet sind.

Auch ist vorstellbar, dass die beiden Verbindungsstege 14a, 14b über einen weiteren, nicht dargestellten Verbindungssteg elektrisch verbunden sein können, der parallel zu den Zähnen 15a, 15b verläuft.

Eine Breite B von Schlitzen, die zwischen zwei benachbarten Zähnen 15a, 15b der zweiten Teilstruktur 7 angeordnet sind, kann in Abhängigkeit einer Frequenz des von den Windungsstrukturen 3a, 3b erzeugten elektromagnetischen Feldes gewählt werden.

In Fig. 2 ist dargestellt, dass die geraden Randabschnitte 6a, 8a parallel zu Randabschnitten der Verbindungsstege 14a, 14b der zweiten Teilstruktur 7 verlaufen. Selbstverständlich ist jedoch auch ein anderer Verlauf der Randabschnitte 6a, 8a vorstellbar, beispielsweise
können die Randabschnitte 6a, 8a und/oder die Randabschnitte 14a, 14b mit einer vorbestimmten Krümmung leicht oder auch stärker gekrümmt sein.

In Fig. 2 ist ersichtlich, dass sich ein Abstand L der kreisförmigen Randabschnitte 6b, 8b von den diesen Randabschnitten 6b, 8b zugewandten Randabschnitt der Verbindungsstege 14a, 14b entlang der kreisförmigen Randabschnitte 6b, 8b verändert.

Die zweite Teilstruktur 7 der Antennenstruktur bildet somit ein Dämpfungsgitter aus, das einen elektrischen Anteil des von den Windungsstrukturen 3a, 3b erzeugten elektromagnetischen Feld dämpft, wobei der magnetische Anteil des elektromagnetischen Feldes nicht oder nur in minimalem Maße gedämpft wird.

Gleichzeitig bildet die zweite Teilstruktur 7 eine Massenfläche 14 der Antennenstruktur. Hierbei sind die zweite Teilstruktur 7 und die erste und weitere Teilstruktur 6, 8 so angeordnet, dass die zweiteTeilstruktur 7, insbesondere der Verbindungssteg 14a der ersten Kammstruktur 18a, mit der ersten Teilstruktur 6 sowie die zweite Teilstruktur 7, insbesondere der Verbindungssteg 14b der zweiten Kammstruktur 18b, mit der weiteren Teilstruktur 8 je einen planaren Breitband-Monopol bildet.

Jeder dieser Monopole kann an einem Fußpunkt F, an welchem der Abstand L zwischen der jeweiligen Teilstruktur 6, 8 und dem der jeweiligen Teilstruktur zugewandten Verbindungssteg 14a, 14b minimal ist, kontaktiert werden, um ein zu sendendes Signal einzuspeisen. Das Signal kann hierbei durch Kontaktierung der ersten, der zweiten und der weiteren Teilstruktur 6, 7, 8 eingespeist werden.

Die Anordnung der zweitenTeilstruktur 7 und der ersten und weiteren Teilstrukturen 6, 8 in zwei parallel zueinander verlaufenden Ebenen erlaubt jedoch auch eine Kontaktierung und Einspeisung beider Monopole über Microstrip-Leitungen.

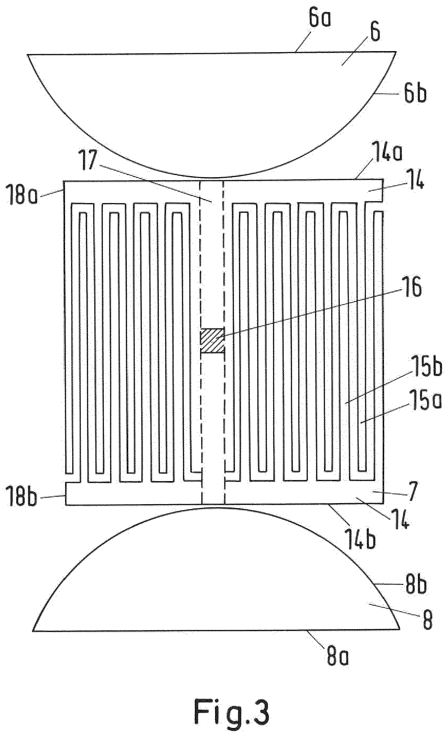

In Fig. 3 ist eine weitere Draufsicht auf die in Fig. 1 dargestellte Vorrichtung 1 dargestellt. Die Verbindungsstege 14a, 14b der zweiten Teilstruktur 7 bilden hierbei geschlossene Masseflächen 14 der Antennenstruktur. In Fig. 3 ist im Unterschied zu Fig. 2 ein Speisepunkt 16 dargestellt, über den ein zu übermittelndes Signal in die Antennenstruktur eingespeist wird. Hierbei ist dargestellt, dass der Speisepunkt 16 zentral zwischen der ersten und der weiteren Teilstruktur 6, 8 angeordnet ist. Gestrichelt dargestellt ist ein Leiterzug 17, der den Speisepunkt 16 sowohl mit der ersten Teilstruktur 6 als auch der weiteren Teilstruktur 8 elektrisch verbindet. Der Leiterzug 16 kann beispielsweise innerhalb der in Fig. 1 dargestellten weiteren Leiterplatte 11 verlaufen.

Sind die beiden Verbindungsstege 14a, 14b über einen weiteren, nicht dargestellten Verbindungssteg elektrisch verbunden sein können, der parallel zu den Zähnen 15a, 15b verläuft, so kann dieser Verbindungssteg eine Massefläche für den Leiterzug 17 ausbilden, wobei der Verbindungssteg und der Leiterzug 17 derart ausgebildet und angeordnet sind, dass sich ein gewünschter Wellenwiderstand für die Einspeisung, z.B. 30 Ohm oder 50 Ohm, ergibt.

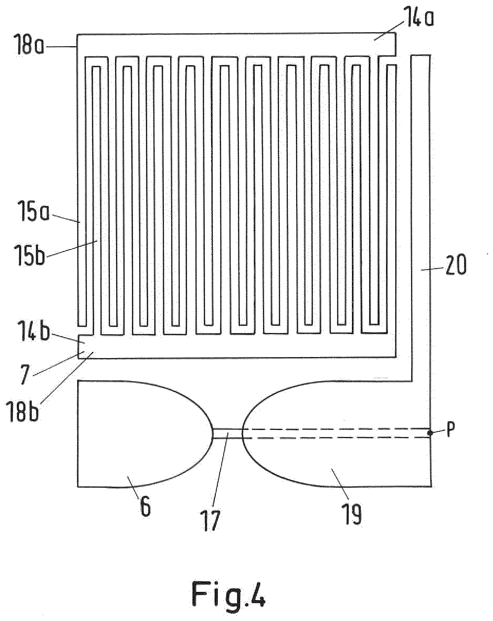

Fig. 4 zeigt eine Draufsicht auf eine erfindungsgemäße Vorrichtung 1 in einer weiteren Ausführungsform. Die Zeichenebene kann hierbei orthogonal zu den in Fig. 1 dargestellten zentralen Achsen 5a, 5b der Windungsstrukturen 3a, 3b orientiert sein. Die Vorrichtung 1 weist, wie die in Fig. 2 dargestellt, eine erste Teilstruktur 6 und eine zweite Teilstruktur 7 auf, wobei die zweite Teilstruktur 7 ein Dämpfungsgitter ausbildet. Die erste Teilstruktur 6 weist einen kelchförmigen Querschnitt auf. Im Unterschied zu der in Fig. 2 dargestellten Ausführungsform verjüngt sich jedoch die erste Teilstruktur 6 nicht hin zur zweiten Teilstruktur, insbesondere hin zum Verbindungssteg 14a der ersten Kammstruktur 18a, sondern hin zu einer weiteren Struktur 19, die eine Massefläche für die erste Teilstruktur 6 ausbildet. Somit bilden die ersten Teilstruktur 6 und die weitere Struktur 19 die Antennenstruktur aus. Dargestellt ist weiter ein Leiterzug 17, der z.B. als Microstrip-Leitung ausgeführt sein kann. Über diesen Leiterzug ist die erste Teilstruktur 6 mit einem Einspeisepunkt P elektrisch verbunden. Die weitere Struktur 19 und der Leiterzug 17 sind hierbei derart ausgebildet und relativ zueinander angeordnet, dass sich eine gewünschter Wellenwiderstand für die Einspeisung ergibt.

Dargestellt ist weiter eine Blindleiter-Struktur 20, die streifenförmig ausgebildet ist. Diese ist Teil der weiteren Struktur 19, die die Massefläche ausbildet und somit Teil der Massefläche. Die Blindleiter-Struktur 20 erstreckt sich parallel zu den Zähnen 15a, 15b der Kammstrukturen 18a, 18b. Bildet die Zeichenebene in Fig. 4 eine Projektionsebene, die senkrecht zu einer zentralen Achse 5a, 5b der Windungsstrukturen 3a, 3b (siehe Fig. 1) orientiert ist, so ist die Blindleiter-Struktur 20 in der Projektionsebene benachbart zu den Windungsstrukturen 3a, 3b angeordnet.

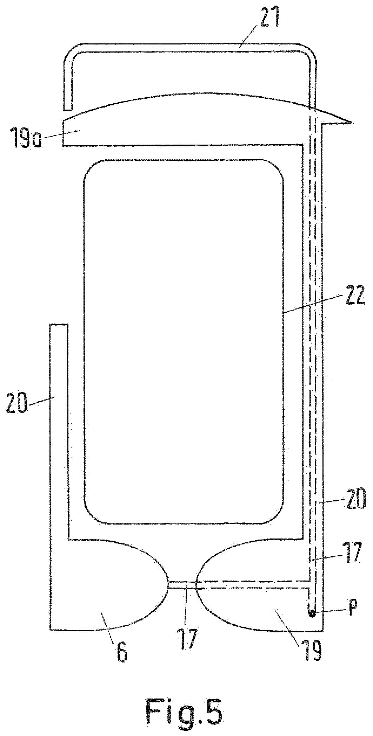

Fig. 5 zeigt eine Draufsicht auf eine erfindungsgemäße Vorrichtung 1 in einer weiteren Ausführungsform. Die Zeichenebene in Fig. 5 kann wiederum senkrecht zu einer zentralen Achse 5a, 5b einer Windungsstruktur 3a, 3b (siehe Fig. 1) orientiert sein. Dargestellt ist eine Einhüllende 22 der Windungsstrukturen 3a, 3b.

Die Vorrichtung 1 umfasst weiter eine erste Teilstruktur 6 einer ersten Antennenstruktur und eine weitere Struktur 19, die entsprechend der in Fig. 4 dargestellten Ausführungsform ausgebildet sind. Die weitere Struktur 19 bildet hierbei die Massefläche der ersten Antennenstruktur aus.

Im Unterschied zur der in Fig. 4 dargestellten Ausführungsform bildet jedoch auch die erste Teilstruktur 6 eine Blindleiter-Struktur 20 aus, die streifenförmig ausgebildet ist und sich parallel zu nicht dargestellten Zähnen 15a, 15b von Kammstrukturen 18a, 18b (siehe z.B. Fig. 2) erstreckt.

Als weiterer Unterschied ergibt sich, dass an einem freien Ende der von der weiteren Struktur 19 ausgebildeten Blindleiter-Struktur 20 eine weitere Massefläche 19a angeordnet ist, die mit der Blindleiter-Struktur 20 der weiteren Struktur 19 elektrisch verbunden ist. Diese weitere Massefläche 19a verjüngt sich hin zu einer ersten Teilstruktur 21 einer weiteren Antennenstruktur, wobei die weitere Antennenstruktur von der ersten Teilstruktur 21 und der weiteren Massefläche 19a ausgebildet wird. Die erste Teilstruktur 21 der weiteren Antennenstruktur, ist hierbei als Leiterzug ausgebildet, die in der Projektionsebene einen im Wesentlichen U-förmigen Querschnitt aufweist, wobei der U-förmige Querschnitt hin zur weiteren Massefläche 19a geöffnet ist und sich die Massefläche hin zum Randabschnitt, welcher dem Innenvolumen des U-förmigen Querschnitts zugewandt ist, verjüngt.

In der Projektionsebene sind hierbei die erste Teilstruktur 6 sowie die Massefläche 19 der ersten Antennenstruktur und die erste Teilstruktur 21 der weiteren Antennenstruktur sowie die weitere Massefläche 19a auf gegenüberliegenden Seiten der Einhüllenden 22 sowie benachbart zur Einhüllenden 22, also benachbart zu den Windungsstrukturen 3a, 3b, angeordnet. Diese Anordnung gewährleistet in vorteilhafter Weise, dass eine gewünschte signaltechnische Kopplung einer Antennenstruktur eines elektronischen Endgeräts, welches z.B. auf die in Fig. 1 dargestellte Auflagefläche 10 aufgelegt ist, mit der ersten und der weiteren Antennenstruktur möglichst unabhängig von einer Lage und Orientierung des elektronischen Endgeräts (und somit seiner Antennenstruktur) gewährleistet wird.

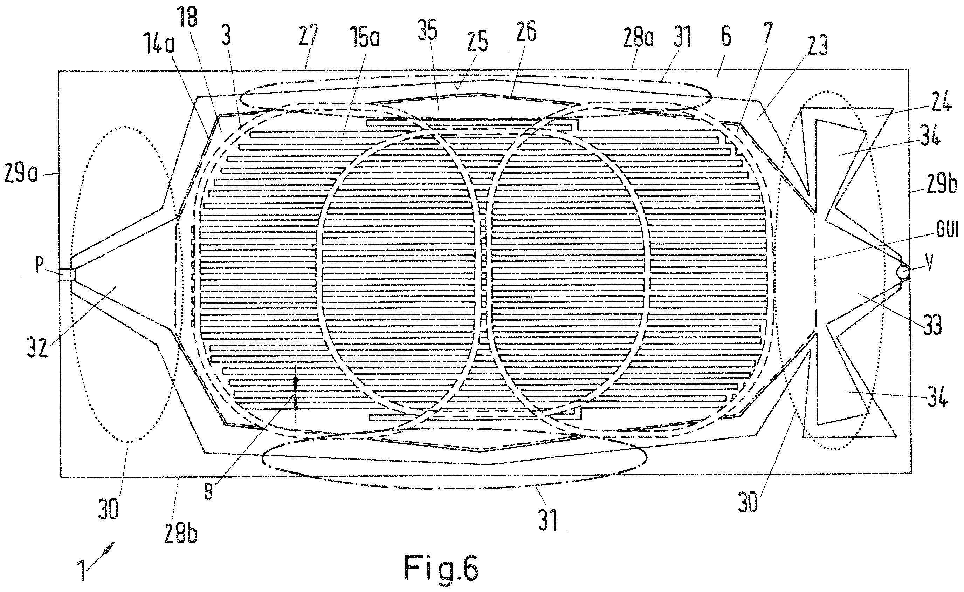

In Fig. 6 ist eine Draufsicht auf eine erfindungsgemäße Vorrichtung 1 in einer weiteren Ausführungsform dargestellt. Hierbei ist eine erste Teilstruktur 6 rahmenförmig ausgebildet, wobei die erste Teilstruktur 6 eine zweite Teilstruktur 7 vollständig umfasst bzw. umschließt.

In Fig. 6 ist hierbei eine Innenfläche 23 dargestellt, die von der ersten Teilstruktur 6 umfasst wird, wobei die zweite Teilstruktur 7 in dieser Innenfläche 23 angeordnet ist. So kann die erste Teilstruktur 6 in der vorhergehend erläuterten Projektionsebene diese Innenfläche 23 umfassen, in der die zweite Teilstruktur 7 angeordnet ist. Die Innenfläche 23, die erste Teilstruktur 6 und die zweite Teilstruktur 7 sind hierbei in einer gemeinsamen Projektionsebene dargestellt. Dargestellt ist weiter ein Spalt 24 zwischen einem Innenrand 25 der erste Teilstruktur 6 und einem Außenrand 26 der zweiten Teilstruktur 7. Weiter dargestellt ist ein Außenrand 27 der erste Teilstruktur 6, der rechteckförmig ausgebildet ist. Hierbei weist der Außenrand 27 der ersten Teilstruktur 6 eine erste Längsseite 28a, eine weitere Längsseite 28b, eine erste Stirnseite 29a und eine weitere Stirnseite 29b auf. Die Längsseiten 28a, 28b können hierbei länger als die Stirnseiten 29a, 29b sein.

Die erste Teilstruktur 6 ist hierbei auf einer Unterseite einer nicht dargestellten Leiterplatte angeordnet, wobei die zweite Teilstruktur 7 auf einer Oberseite der Leiterplatte angeordnet ist.

Im Bereich der ersten Stirnseite 29a der ersten Teilstruktur 6 ist ein Einspeisepunkt P angeordnet, wobei im Bereich des Einspeisepunkts P ein Signal in die Teilstrukturen 6, 7 eingekoppelt oder aus diesen ausgekoppelt wird. Hierbei kann die erste Teilstruktur 6 über einen ersten Kontakt eines Hochfrequenz-Steckverbinders (nicht dargestellt) mit einem, insbesondere zeitlich konstanten Referenzpotential, verbunden werden, beispielsweise über eine Schirmleitung eines nicht dargestellten Koaxialkabels. Weiter kann die zweite Teilstruktur 7 über einen weiteren Kontakt eines Hochfrequenz-Steckverbinders (nicht dargestellt) mit einem, insbesondere zeitlich veränderlichen, weiteren Potential, verbunden werden, beispielsweise über eine Kabelseele des nicht dargestellten Koaxialkabels.

Die erste Teilstruktur 6 kann eine Massenfläche der Antennenstruktur ausbilden.

Aus Fig. 6 ist ersichtlich, dass ein Abstand zwischen dem Innenrand 25 der ersten Teilstruktur 6 und dem Außenrand 26 der zweiten Teilstruktur 7 entlang des Innenrands 25 der ersten Teilstruktur 6 und somit eine Spaltbreite des Spalts 24 variiert.

In Fig. 6 ist eine nicht dargestellte zentrale Achse einer Windungsstruktur 3 orthogonal zur Zeichenebene und hin zum Betrachter orientiert. In Bezug auf diese zentrale Achse ist eine positive mathematische Richtung als um diese zentrale Achse rechtsdrehend definiert. Der Abstand variiert für Punkte in mathematischer positiver Richtung entlang des Innenrands 25.

Durch punktiert umrandete Ovale sind erste Kopplungsbereiche 30 dargestellt. Durch strichpunkt-umrandete Ovale sind zweite Kopplungsbereiche 31 dargestellt. Hierbei ist der Abstand zwischen dem Innenrand 25 der ersten Teilstruktur 6 und dem Außenrand 26 der zweiten Teilstruktur 7 in den ersten Kopplungsbereichen 30 derart gewählt, dass Signale in den Frequenzbereichen der Mobilfunkstandards GSM850 und/oder GSM900, insbesondere mit einem vorbestimmten Koppelfaktor, empfangbar und sendbar sind. Weiter ist der Abstand zwischen dem Innenrand 25 der ersten Teilstruktur 6 und dem Außenrand 26 der zweiten Teilstruktur 7 in den zweiten Kopplungsbereichen 31 derart gewählt, dass Signale in den Frequenzbereichen der Mobilfunkstandards GSM1900 und/oder UMTS2100, insbesondere mit einem vorbestimmten Koppelfaktor, empfangbar und sendbar sind.

Die ersten Kopplungsbereiche 30 sind hierbei im Bereich der Stirnseiten 29a, 29b der ersten Teilstruktur 6 angeordnet und erstrecken sich entlang der jeweiligen Stirnseite 29a, 29b. Die zweiten Kopplungsbereiche 31 sind hierbei im Bereich der Längsseiten 28a, 28b der ersten Teilstruktur 6 angeordnet und erstrecken sich entlang der jeweiligen Längsseiten 28a, 28b.

Weiter dargestellt ist, dass die erste und die zweite Teilstruktur 6, 7 im Bereich der weiteren Stirnseite 29b einen Verbindungspunkt oder -abschnitt V zur galvanischen Verbindung der Teilstrukturen 6, 7 aufweist. Dieser Verbindungspunkt oder -abschnitt V kann durch eine Durchkontaktierung oder eine Randbereichkontaktierung gegeben sein.

Weiter ist dargestellt, dass die zweite Teilstruktur 6 einen ersten Vorsprung 32 und einen weiteren Vorsprung 33 aufweist, wobei der weitere Vorsprung 33 zwei Untervorsprünge 34 aufweist.

Dargestellt ist eine Grund-Umfangslinie GUL der zweiten Teilstruktur 7, die ein einfaches, konvexes Polygon umfasst bzw. ausbildet. Aufgrund des ersten und des weiteren Vorsprungs 32, 33 umfasst die tatsächliche Umfangslinie der zweiten Teilstruktur 7 ein nichtkonvexes Polygon. Entsprechendes gilt für die Untervorsprünge 34 des weiteren Vorsprungs 33. Eine nicht dargestellte Grund-Umfangslinie dieses weiteren Vorsprungs umfasst ein einfaches, konvexes Polygon. Aufgrund der Untervorsprünge 34 umfasst die tatsächliche Umfangslinie des weiteren Vorsprungs 33 ein nichtkonvexes Polygon.

Hierbei ist dargestellt, dass die erste Teilstruktur 6 zu den Vorsprüngen korrespondierende Ausnehmungen oder Ausbuchtungen aufweist, in die sich die Vorsprünge 32, 33 und Untervorsprünge 34 erstrecken.

Die zweite Teilstruktur 7 umfasst einen rahmenförmigen Randabschnitt 35, wobei der Randabschnitt 35 ein von der zweiten Teilstruktur 7 ausgebildetes Dämpfungsgitter umschließt. Der Randabschnitt 35 umfasst hierbei den Stirnseiten 29a, 29b zugewandte Teilabschnitte und den Längsseiten 28a, 28b zugewandte Teilabschnitte, wobei die Teilabschnitte galvanisch verbunden sind.

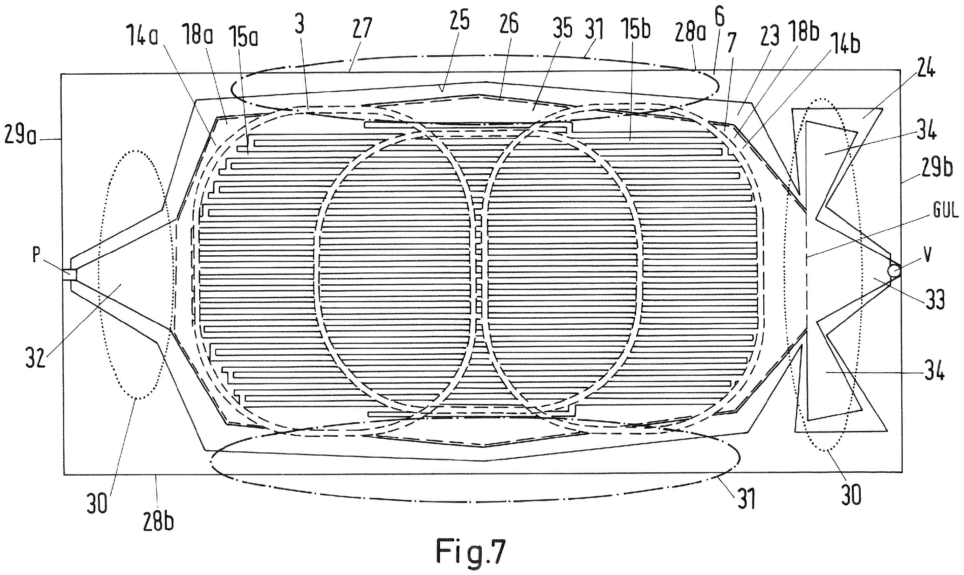

Der Teilabschnitt, der der ersten Stirnseite 29a zugewandt ist, bildet hierbei einen Verbindungssteg 14a aus, wobei sich die Zähne 15a von dem Verbindungsteg 14 hin zum Teilabschnitt des Randabschnitts 35 erstrecken, der der weiteren Stirnseite 29b zugewandt ist. Die freien Enden der Zähne 15a berühren hierbei diesen Teilabschnitt jedoch nicht. Der Übersichtlichkeit halber ist nur ein Zahn 15a mit einem Bezugszeichen versehen. Somit weist die zweite Teilstruktur 7 eine Kammstruktur 18a mit Zähnen 15a auf, wobei sich in der in Fig. 7 dargestellten Ausführungsform die Zähne 15a parallel zu den Längsseite 28a, 28b der ersten Teilstruktur 6 erstrecken.

Eine Breite B der Schlitze zwischen benachbarten Zähnen 15a kann hierbei, wie vorhergehend erläutert, in Abhängigkeit der Frequenz des von der Windungsstruktur 3 erzeugten elektromagnetischen Feldes gewählt werden.

In Fig. 7 ist eine Draufsicht auf eine erfindungsgemäße Vorrichtung 1 in einer weiteren Ausführungsform dargestellt. Die in Fig. 7 dargestellte Vorrichtung ist im Wesentlichen wie die Vorrichtung 1 der in Fig. 6 dargestellten Ausführungsform ausgebildet. Daher wird auf die Erläuterung zu Fig. 6 verwiesen.

Im Unterschied zu der in Fig. 6 dargestellten Ausführungsform bildet auch der Teilabschnitt des Randabschnitts 35 der zweiten Teilstruktur 7, der der weiteren Stirnseite 29b zugewandt ist, einen zweiten Verbindungssteg 14b aus, wobei sich weitere Zähne 15b von dem zweiten Verbindungsteg 14b hin zum Teilabschnitt des Randabschnitt 35 erstrecken, der der ersten Stirnseite 29a zugewandt ist. Die freien Enden der weiteren Zähne 15b berühren hierbei diesen Teilabschnitt jedoch nicht. Somit umfasst die zweite Teilstruktur 7 sowohl eine erste Kammstruktur 18a mit einem ersten Verbindungssteg 14a und ersten Zähnen 15a als auch eine zweite Kammstruktur 18b mit einem zweiten Verbindungssteg 14b und weiteren Zähnen 15b. Wie in Bezug auf Fig. 2 bereits beschrieben sind die erste und die zweite Kammstruktur 18a, 18b derart zueinander angeordnet, dass die Zähne 15a, 15b ineinandergreifen. Der Übersichtlichkeit halber sind nur jeweils ein Zahn 15a, 15b mit einem Bezugszeichen versehen.

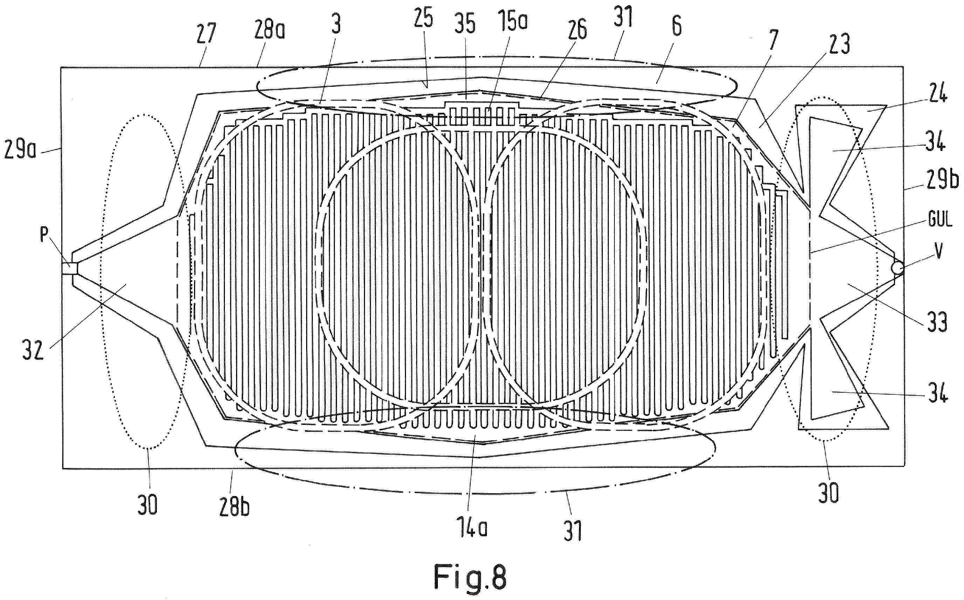

In Fig. 8 ist eine Draufsicht auf eine erfindungsgemäße Vorrichtung 1 in einer weiteren Ausführungsform dargestellt. Die in Fig. 8 dargestellte Vorrichtung ist im Wesentlichen wie die Vorrichtung 1 der in Fig. 6 dargestellten Ausführungsform ausgebildet. Daher wird auf die Erläuterungen zu Fig. 6 verwiesen. Im Unterschied zu der in Fig. 6 dargestellten Ausführungsform bildet der Teilabschnitt des Randabschnitts 35 der zweiten Teilstruktur 7, der einer weiteren Längsseite 28b zugewandt ist, einen ersten Verbindungssteg 14a aus, wobei sich die Zähne 15a von dem Verbindungsteg 14a hin zum Teilabschnitt des Randabschnitts 35 erstrecken, der der ersten Längsseite 28a zugewandt ist. Die freien Enden der Zähne 15a berühren hierbei diesen Teilabschnitt jedoch nicht. Der Übersichtlichkeit halber ist nur ein Zahn 15a mit einem Bezugszeichen versehen.

## Patentansprüche

1. Vorrichtung zur kombinierten Signalübertragung oder zur kombinierten Signal- und Energieübertragung, insbesondere zu einem portablen elektronischen Endgerät (2), wobei die Vorrichtung (1) mindestens eine Windungsstruktur (3a, 3b) zur Erzeugung eines ersten elektromagnetischen Feldes zur Energieübertragung oder zur Signalübertragung umfasst, wobei die Vorrichtung (1) weiter mindestens eine Antennenstruktur für eine weitere Signalübertragung umfasst, wobei die Antennenstruktur eine erste Teilstruktur (6) und eine zweite Teilstruktur (7) umfasst, wobei die erste Teilstruktur (6) derart ausgebildet und/oder gegenüber der zweiten Teilstruktur (7) angeordnet ist, dass mittels der Antennenstruktur Signale in einem ersten Frequenzbereich empfangbar und sendbar sind,
wobei
zumindest die erste Teilstruktur (6) in einer Projektionsebene (9), die senkrecht zu einer zentralen Achse (5a, 5b) der Windungsstruktur (3a, 3b) orientiert ist, benachbart zu der mindestens einen Windungsstruktur (3a, 3b) angeordnet ist, wobei die zentrale Achse der Windungsstruktur (3a, 3b) eine Symmetrieachse der Windungsstruktur (3a, 3b) ist,
**dadurch gekennzeichnet, dass**
die Vorrichtung (1) weiter eine Dämpfungsstruktur umfasst, die derart ausgebildet ist, das elektrische Feld, welches durch die Windungsstruktur (3a, 3b) erzeugt wird, zu dämpfen, wobei sich die Dämpfungsstruktur in der Projektionsebene (9) mit der mindestens einen Windungsstruktur (3a, 3b) zumindest teilweise überschneidet.

2. Vorrichtung nach Anspruch 1, **dadurch gekennzeichnet, dass** die Dämpfungsstruktur und die Antennenstruktur auf einer gemeinsamen Leiterplatte (11) angeordnet sind.

3. Vorrichtung nach Anspruch 1 oder 2, **dadurch gekennzeichnet, dass** die Dämpfungsstruktur die zweite Teilstruktur (7) der Antennenstruktur zumindest teilweise ausbildet.

4. Vorrichtung nach einem der Ansprüche 1 bis 3, **dadurch gekennzeichnet, dass** die zweite Teilstruktur (7) oder die erste Teilstruktur (6) eine Massefläche (14) der Antennenstruktur ausbildet.

5. Vorrichtung nach einem der Ansprüche 1 bis 4, **dadurch gekennzeichnet, dass** die erste Teilstruktur (6) rahmenförmig ausgebildet ist, wobei die erste Teilstruktur (6) die zweite Teilstruktur (7) vollständig umgibt.

6. Vorrichtung nach Anspruch 5, **dadurch gekennzeichnet, dass** ein Abstand zwischen einem Innenrand (25) der ersten Teilstruktur (6) und einem Außenrand (26) der zweiten Teilstruktur (7) entlang des Innenrands (25) der ersten Teilstruktur (6) variiert.

7. Vorrichtung nach einem der Ansprüche 5 bis 6, **dadurch gekennzeichnet, dass** ein Außenrand (27) der ersten Teilstruktur (6) einen im Wesentlichen rechteckigförmigen Verlauf aufweist, wobei der Abstand zwischen einem Innenrand (25) der ersten Teilstruktur (6) und einem Außenrand (26) der zweiten Teilstruktur (7) in einem Teilbereich, der sich entlang einer Längsseite (28a, 28b) der ersten Teilstruktur (6) erstreckt, derart gewählt ist, dass Signale in einem ersten Teilfrequenzbereich empfangbar und sendbar sind, wobei der Abstand zwischen dem Innenrand (25) der ersten Teilstruktur (6) und dem Außenrand (26) der zweiten Teilstruktur (7) in einem Teilbereich, der sich entlang einer Stirnseite (29a, 29b) der ersten Teilstruktur (6) erstreckt, derart gewählt ist, dass Signale in einem weiteren Teilfrequenzbereich empfangbar und sendbar sind.

8. Vorrichtung nach einem der Ansprüche 5 bis 7, **dadurch gekennzeichnet, dass** die erste Teilstruktur (6) entlang des Innenrands (25) und/oder die zweite Teilstruktur (7) entlang des Außenrands (26) mindestens einen Vorsprung (32, 33, 34) aufweist.

9. Vorrichtung nach einem der Ansprüche 1 bis 8, **dadurch gekennzeichnet, dass** die erste Teilstruktur (6) und die zweite Teilstruktur (7) galvanisch oder signalleitend verbunden sind.

10. Vorrichtung nach einem der Ansprüche 1 bis 4, **dadurch gekennzeichnet, dass** die erste Teilstruktur (6) der Antennenstruktur kelchförmig ausgebildet ist.

11. Vorrichtung nach einem der Ansprüche 1 bis 10, **dadurch gekennzeichnet, dass** die Dämpfungsstruktur zumindest teilweise kammförmig ausgebildet ist.

12. Vorrichtung nach einem der Ansprüche 1 bis 11, **dadurch gekennzeichnet, dass** die Dämpfungsstruktur mindestens ein kapazitives Element umfasst, wobei durch das kapazitive Element zumindest zwei Teilabschnitte der Dämpfungsstruktur elektrisch verbunden sind.

13. Vorrichtung nach einem der Ansprüche 1 bis 12, **dadurch gekennzeichnet, dass** die Antennenstruktur mindestens eine weitere Teilstruktur (8) umfasst, wobei die weitere Teilstruktur (8) derart ausgebildet und/oder gegenüber der zweiten Teilstruktur (7) angeordnet ist, dass mittels der weiteren Teilstruktur (8) Signale in einem zweiten Frequenzbereich empfangbar und sendbar sind, wobei die weitere Teilstruktur (8) in der Projektionsebene (9), benachbart zu der mindestens einen Windungsstruktur (3a, 3b) angeordnet ist.

14. Verfahren zur kombinierten Signalübertragung oder zur kombinierten Signal- und Energieübertragung, insbesondere zu einem portablen elektronischen Endgerät (2), wobei mindestens eine Windungsstruktur (3a, 3b) ein elektromagnetisches Feld zur Energie- oder Signalübertragung erzeugt, wobei eine Antennenstruktur Signale empfängt oder sendet, wobei die Antennenstruktur eine erste Teilstruktur (6) und eine zweite Teilstruktur (7) umfasst, wobei die erste Teilstruktur (6) derart ausgebildet und/oder gegenüber der zweiten Teilstruktur (7) angeordnet ist, dass mittels der Antennenstruktur Signale in einem ersten Frequenzbereich empfangbar und sendbar sind,
wobei
zumindest die erste Teilstruktur (6) in einer Projektionsebene (9), die senkrecht zu einer zentralen Achse (5a, 5b) der Windungsstruktur (3a, 3b) orientiert ist, benachbart zu der mindestens einen Windungsstruktur (3a, 3b) angeordnet ist, wobei die zentrale Achse der Windungsstruktur (3a, 3b) eine Symmetrieachse der Windungsstruktur (3a, 3b) ist,
**dadurch gekennzeichnet, dass**
die Vorrichtung (1) weiter eine Dämpfungsstruktur umfasst, die derart ausgebildet ist, das elektrische Feld, welches durch die Windungsstruktur (3a, 3b) erzeugt wird, zu dämpfen, wobei sich die Dämpfungsstruktur in der Projektionsebene (9) mit der mindestens einen Windungsstruktur (3a, 3b) zumindest teilweise überschneidet.

## Claims

1. Device for combined signal transmission or for combined signal transmission and energy transmission, in particular to a portable electronic terminal device (2), wherein the device (1) comprises at least one winding structure (3a, 3b) for generating a first electromagnetic field so as to transmit energy or to transmit signals, wherein the device (1) also comprises at least one antenna structure for transmitting further signals, wherein the antenna structure comprises a first part structure (6) and a second part structure (7), wherein the first part structure (6) is embodied and/or arranged opposite the second part structure (7) in such a manner that signals can be received and transmitted in a first frequency range by means of the antenna structure,
wherein
at least the first part structure (6) is arranged adjacent to the at least one winding structure (3a, 3b) in a projection plane (9) that is oriented perpendicular to a central axis (5a, 5b) of the winding structure (3a, 3b), wherein the central axis of the winding structure (3a, 3b) is a symmetrical axis of the winding structure (3a, 3b),
**characterized in that**
the device (1) also comprises a damping structure which is embodied so as to damp the electrical field that is generated by means of the winding structure (3a, 3b), wherein the damping structure overlaps at least in part the at least one winding structure (3a, 3b) in the projection plane (9).

2. Device according to Claim 1, **characterized in that** the damping structure and the antenna structure are arranged on a common circuit board (11).

3. Device according to Claim 1 or 2, **characterized in that** the damping structure forms at least in part the second part structure (7) of the antenna structure.

4. Device according to any one of Claims 1 to 3, **characterized in that** the second part structure (7) or the first part structure (6) forms a ground surface (14) of the antenna structure.

5. Device according to any one of Claims 1 to 4, **characterized in that** the first part structure (6) is embodied in the form of a frame, wherein the first part structure (6) completely surrounds the second part structure (7).

6. Device according to Claim 5, **characterized in that** a gap between an inner edge (25) of the first part structure (6) and an outer edge (26) of the second part structure (7) varies along the inner edge (25) of the first part structure (6).

7. Device according to any either of Claims 5 and 6, **characterized in that** an outer edge (27) of the first part structure (6) comprises an essentially rectangular contour, wherein the gap between an inner edge (25) of the first part structure (6) and an outer edge (26) of the second part structure (7) in a part region that extends along a longitudinal side (28a, 28b) of the first part structure (6) is selected in such a manner that signals can be received and transmitted in a first part frequency range, wherein the gap between the inner edge (25) of the first part structure (6) and the outer edge (26) of the second part structure (7) in a part region that extends along an end face (29a, 29b) of the first part structure (6) is selected in such a manner that signals can be received and transmitted in a further part frequency range.

8. Device according to any one of Claims 5 to 7, **characterized in that** the first part structure (6) comprises along the inner edge (25) at least one protrusion (32, 33, 34) and/or the second part structure (7) comprises along the outer edge (26) at least one protrusion (32, 33, 34).

9. Device according to any one of Claims 1 to 8, **characterized in that** the first part structure (6) and the second part structure (7) are connected in a galvanic manner or in a manner so as to conduct signals.

10. Device according to any one of Claims 1 to 4, **characterized in that** the first part structure (6) of the antenna structure is embodied in a cup-shaped manner.

11. Device according to any one of Claims 1 to 10, **characterized in that** the damping structure is embodied at least in part in a comb-shaped manner.

12. Device according to any one of Claims 1 to 11, **characterized in that** the damping structure comprises at least one capacitive element, wherein at least two part sections of the damping structure are connected in an electrical manner by means of the capacitive element.

13. Device according to any one of Claims 1 to 12, **characterized in that** the antenna structure comprises at least one further part structure (8), wherein the further part structure (8) is embodied and/or arranged opposite the second part structure (7) in such a manner that signals can be received and transmitted in a second frequency range by means of the further part structure (8), wherein the further part structure (8) is arranged adjacent to the at least one winding structure (3a, 3b) in the projection plane (9).

14. Method for combined signal transmission or for combined signal transmission and energy transmission, in particular to a portable electronic terminal device (2), wherein at least one winding structure (3a, 3b) generates an electromagnetic field so as to transmit energy or to transmit signals, wherein an antenna structure receives or transmits signals, wherein the antenna structure comprises a first part structure (6) and a second part structure (7), wherein the first part structure (6) is embodied and/or arranged opposite the second part structure (7) in such a manner that signals can be received and transmitted in a first frequency range by means of the antenna structure,
wherein
at least the first part structure (6) is arranged adjacent to the at least one winding structure (3a, 3b) in a projection plane (9) that is oriented perpendicular to a central axis (5a, 5b) of the winding structure (3a, 3b), wherein the central axis of the winding structure (3a, 3b) is a symmetrical axis of the winding structure (3a, 3b),
**characterized in that**
the device (1) also comprises a damping structure which is embodied so as to damp the electrical field that is generated by means of the winding structure (3a, 3b), wherein the damping structure overlaps at least in part the at least one winding structure (3a, 3b) in the projection plane (9).

## Revendications

1. Dispositif permettant la transmission combinée de signaux ou la transmission combinée de signaux et d'énergie, en particulier à un terminal électronique portable (2), le dispositif (1) comprenant au moins une structure d'enroulement (3a, 3b) pour produire un premier champ électromagnétique pour la transmission d'énergie ou pour la transmission de signaux, le dispositif (1) comprenant en outre au moins une structure d'antenne pour une transmission de signaux supplémentaire, dans lequel la structure d'antenne comprend une première structure partielle (6) et une deuxième structure partielle (7), dans lequel la première structure partielle (6) est réalisée et/ou agencée par rapport à la deuxième structure partielle (7) de telle sorte que des signaux peuvent être reçus et émis dans une première gamme de fréquences au moyen de la structure d'antenne,
dans lequel au moins la première structure partielle (6) est agencée en juxtaposition par rapport à l'au moins une structure d'enroulement (3a, 3b) dans un plan de projection (9), lequel est orienté perpendiculairement à un axe central (5a, 5b) de la structure d'enroulement (3a, 3b), dans lequel l'axe central de la structure d'enroulement (3a, 3b) est un axe de symétrie de la structure d'enroulement (3a, 3b),
**caractérisé en ce que** le dispositif (1) comprend en outre une structure d'atténuation, laquelle est réalisée de façon à atténuer le champ électrique produit par la structure d'enroulement (3a, 3b),
dans lequel la structure d'atténuation chevauche au moins partiellement l'au moins une structure d'enroulement (3a, 3b) dans le plan de projection (9).

2. Dispositif selon la revendication 1, **caractérisé en ce que** la structure d'atténuation et la structure d'antenne sont agencées sur une plaque conductrice commune (11).

3. Dispositif selon la revendication 1 ou 2, **caractérisé en ce que** la structure d'atténuation forme au moins partiellement la deuxième structure partielle (7) de la structure d'antenne.

4. Dispositif selon l'une des revendications 1 à 3, **caractérisé en ce que** la deuxième structure partielle (7) ou la première structure partielle (6) forme un plan de masse (14) de la structure d'antenne.

5. Dispositif selon l'une des revendications 1 à 4, **caractérisé en ce que** la première structure partielle (6) est réalisée sous forme de cadre, dans lequel la première structure partielle (6) entoure entièrement la deuxième structure partielle (7).

6. Dispositif selon la revendication 5, **caractérisé en ce qu'**un écart entre un bord intérieur (25) de la première structure partielle (6) et un bord extérieur (26) de la deuxième structure partielle (7) varie le long du bord intérieur (25) de la première structure partielle (6).

7. Dispositif selon l'une des revendications 5 et 6, **caractérisé en ce qu'**un bord extérieur (27) de la première structure partielle (6) possède un tracé essentiellement rectangulaire, dans lequel l'écart entre un bord intérieur (25) de la première structure partielle (6) et un bord extérieur (26) de la deuxième structure partielle (7) dans une zone partielle s'étendant le long d'un côté longitudinal (28a, 28b) de la première structure partielle (6) est choisi de telle sorte que des signaux peuvent être reçus et émis dans une première gamme partielle de fréquences, dans lequel l'écart entre le bord intérieur (25) de la première structure partielle (6) et le bord extérieur (26) de la deuxième structure partielle (7) dans une zone partielle s'étendant le long d'un côté frontal (29a, 29b) de la première structure partielle (6) est choisi de telle sorte que des signaux peuvent être reçus et émis dans une gamme partielle supplémentaire de fréquences.

8. Dispositif selon l'une des revendications 5 à 7, **caractérisé en ce que** la première structure partielle (6) comporte le long du bord intérieur (25) et/ou la deuxième structure partielle (7) comporte le long du bord extérieur (26) au moins une saillie (32, 33, 34).

9. Dispositif selon l'une des revendications 1 à 8, **caractérisé en ce que** la première structure partielle (6) et la deuxième structure partielle (7) sont reliées galvaniquement ou en liaison de signaux.

10. Dispositif selon l'une des revendications 1 à 4, **caractérisé en ce que** la première structure partielle (6) de la structure d'antenne est réalisée en forme de coquille.

11. Dispositif selon l'une des revendications 1 à 10, **caractérisé en ce que** la structure d'atténuation est réalisée au moins partiellement en forme de peigne.

12. Dispositif selon l'une des revendications 1 à 11, **caractérisé en ce que** la structure d'atténuation comprend au moins un élément capacitif, dans lequel au moins deux portions partielles de la structure d'atténuation sont reliées électriquement par le biais de l'élément capacitif.

13. Dispositif selon l'une des revendications 1 à 12, **caractérisé en ce que** la structure d'antenne comprend au moins une structure partielle supplémentaire (8), dans lequel la structure partielle supplémentaire (8) est réalisée et/ou agencée par rapport à la deuxième structure partielle (7) de telle sorte que des signaux peuvent être reçus et émis dans une deuxième gamme de fréquences au moyen de la structure partielle supplémentaire (8), dans lequel la structure partielle supplémentaire (8) est agencée en juxtaposition par rapport à l'au moins une structure d'enroulement (3a, 3b) dans le plan de projection (9).

14. Procédé permettant la transmission combinée de signaux ou la transmission combinée de signaux et d'énergie, en particulier à un terminal électronique portable (2), dans lequel au moins une structure d'enroulement (3a, 3b) produit un champ électromagnétique pour la transmission d'énergie ou de signaux, dans lequel une structure d'antenne reçoit ou émet des signaux, dans lequel la structure d'antenne comprend une première structure partielle (6) et une deuxième structure partielle (7), dans lequel la première structure partielle (6) est réalisée et/ou agencée par rapport à la deuxième structure partielle (7) de telle sorte que des signaux peuvent être reçus et émis dans une première gamme de fréquences au moyen de la structure d'antenne, dans lequel au moins la première structure partielle (6) est agencée en juxtaposition par rapport à l'au moins une structure d'enroulement (3a, 3b) dans un plan de projection (9), lequel est orienté perpendiculairement à un axe central (5a, 5b) de la structure d'enroulement (3a, 3b), dans lequel l'axe central de la structure d'enroulement (3a, 3b) est un axe de symétrie de la structure d'enroulement (3a, 3b),
**caractérisé en ce que** le dispositif (1) comprend en outre une structure d'atténuation, laquelle est réalisée de façon à atténuer le champ électrique produit par la structure d'enroulement (3a, 3b), dans lequel la structure d'atténuation chevauche au moins partiellement l'au moins une structure d'enroulement (3a, 3b) dans le plan de projection (9).
